(19) Europäisches Patentamt / European Patent Office / Office européen des brevets

(11) **EP 3 648 439 B1**

(12) **FASCICULE DE BREVET EUROPEEN**

(45) Date de publication et mention de la délivrance du brevet:
**25.09.2024 Bulletin 2024/39**

(21) Numéro de dépôt: **19205779.2**

(22) Date de dépôt: **29.10.2019**

(51) Classification Internationale des Brevets (IPC):
*H04L 67/12* (2022.01)  *H04L 67/565* (2022.01)
*G08G 5/00* (2006.01)  *G08G 5/04* (2006.01)
*G05D 1/00* (2024.01)  *H04W 4/38* (2018.01)
*H04W 4/42* (2018.01)

(52) Classification Coopérative des Brevets (CPC):
**H04L 67/12; G01S 17/933; G05D 1/1064; G08G 5/0021; G08G 5/045; H04L 67/565;** H04W 4/38; H04W 4/42

(54) **DISPOSITIF ANTICOLLISION, SYSTÈME AVIONIQUE DE PROTECTION, PROCÉDÉ D'ANTICOLLISION ET PROGRAMME D'ORDINATEUR ASSOCIÉS**

VORRICHTUNG ZUR ANTI-COLLISION, AVIONISCHES SCHUTZSYSTEM, VERFAHREN ZUR ANTI-COLLISION UND COMPUTERPROGRAMM

ANTI-COLLISION DEVICE, AVIONIC PROTECTION SYSTEM, ANTI-COLLISION METHOD AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2018 FR 1801152**

(43) Date de publication de la demande:
**06.05.2020 Bulletin 2020/19**

(73) Titulaire: **Thales**
**92400 Courbevoie (FR)**

(72) Inventeurs:
• **FLOTTE, Laurent**
**31300 TOULOUSE (FR)**
• **DEMOMENT, Ronan**
**31300 TOULOUSE (FR)**
• **FLEURY, Stéphane**
**31300 TOULOUSE (FR)**
• **RUEFF, Xavier**
**31300 TOULOUSE (FR)**
• **MAULET, Daniel**
**31036 TOULOUSE (FR)**

(74) Mandataire: **Lavoix**
**2, place d'Estienne d'Orves**
**75441 Paris Cedex 09 (FR)**

(56) Documents cités:
**CN-A- 108 319 982    US-A1- 2018 095 467**
**US-B2- 9 519 286**

**Description**

La présente invention concerne un dispositif anticollision d'un aéronef comprenant une pluralité de capteurs, la pluralité de capteurs comprenant au moins deux capteurs distincts, chaque capteur étant propre à délivrer respectivement son propre ensemble de données captées en fonction de la proximité d'au moins une obstruction.

L'invention concerne également un système avionique de protection d'un aéronef.

L'invention concerne également un procédé d'anticollision et un produit programme d'ordinateur associé.

Par la suite, on entend par obstruction tout élément propre à entraver le déplacement de l'aéronef que ce soit le sol (ou terrain), un élément naturel du relief, une construction humaine tel qu'un immeuble, un pont, un câble électrique, un élément temporaire et/ou propre à se déplacer tel qu'un élément végétal ou animal, un humain, un véhicule, etc.

Par aéronef, on entend tout moyen de transport propre à s'élever à une altitude non nulle par rapport au sol, tel qu'un avion, un aéronef, un drone, etc.

L'invention concerne le domaine de l'aide au pilotage d'aéronef notamment afin d'alerter l'équipage, ou à tout le moins le pilote, d'un risque de collision avec un élément de la zone survolée.

De par les types de mission réalisés (atterrissage et décollage en zone difficiles d'accès et/ou non préparées, vol en basse altitude, vol stationnaire très proche du relief (ex secours en montagne, observation)), un aéronef est un appareil très fortement exposé au risque de collision avec une ou des obstructions situées dans son environnement proche.

Actuellement, en considérant un système de surveillance intégré à l'aéronef (ISS de l'anglais *Integrated Surveillance System*) comprenant notamment un dispositif avionique d'avertissement et d'évitement du relief de l'aéronef (TAWS ou HTAWS de l'anglais *Terrain Awareness & Warning System ou Helicopter Awareness & Warning System*) qui remplissent, tel que notamment décrit dans FR 2 773 609, une fonction primaire de surveillance d'anticollision avec le terrain et ont pour but l'émission d'alertes sonores lors d'une approche dangereuse du relief, permettant à l'équipage de réagir en engageant un évitement avant qu'il ne soit trop tard.

De tels systèmes permettent globalement de protéger l'aéronef en phase de croisière en se basant sur des modèles numériques prédéfinis de terrain et d'obstacles mais leurs fonctions sont limitées, voire inhibées, lors des phases de décollage et d'atterrissage durant lesquelles les cas de collision sont les plus fréquents.

Par ailleurs, de tels systèmes ne sont pas aptes à détecter dans toutes les directions des obstacles, qui plus est mobiles tels que des véhicules terrestres ou temporaires tel que la végétation ou des grues par exemple.

Enfin l'alerte générée par de tels systèmes est uniquement représentative du dépassement d'un seuil d'alerte prédéterminé mais n'est pas représentative de l'écart relatif entre la situation en temps réel de l'aéronef et ce seuil prédéfini.

On connaît par ailleurs des systèmes de détection active, à base de laser, de radar, en particulier de radar courte portée. Toutefois, de tels systèmes sont complexes et coûteux à installer sur un aéronef, sensibles aux conditions environnementales (e.g. poussière, brouillard), offre une couverture partielle de l'aéronef (i.e. par exemple seule la partie avant de l'aéronef est protégée et non les parties latérales et l'empennage arrière), et/ou associés à un nombre d'échos reçus élevé source de bruit environnant propre à perturber le fonctionnement d'autres instruments de l'aéronef.

On connaît également des systèmes de type vision augmentée propres à remplir une fonction de protection contre les collisions en améliorant pour l'équipage la représentation de la situation en temps réel de l'aéronef, cependant de tels système présentent un champ de vision dont la couverture est partielle au regard de l'ensemble de la surface d'aéronef à protéger.

CN 108 319 982 A décrit un dispositif anticollision d'un aéronef comprenant une pluralité de capteurs, avec au moins deux capteurs distincts, chaque capteur étant propre à délivrer respectivement son propre ensemble de données captées en fonction de la proximité d'au moins une obstruction.

US 2018/095467 A1 concerne un système d'exploitation à usage général appliqué à un drone aérien pour l'évitement d'obstacle.

US 9 519 286 B2 concerne le contrôle d'un véhicule par un téléopérateur et décrit une plateforme comprenant une pluralité de capteurs ayant chacun leur propre classe de traitement de données et connectés au reste du système via une interface de capteur générique permettant d'ajouter, échanger, supprimer des capteurs de la plateforme.

Le but de l'invention est alors de proposer un dispositif et un procédé avioniques qui permettent d'augmenter la sécurité de l'ensemble de l'aéronef (i.e. avant, arrière, partie latérales, le dessus, le dessous) et de ses occupants quel que soit la phase de vol, le type d'obstruction, l'altitude de vol.

A cet effet, l'invention a pour objet un dispositif anticollision d'un aéronef, selon la revendication 1.

Par distinct, on entend que les capteurs sont physiquement distincts et donc associés à des positions distinctes au sein de l'aéronef. En complément optionnel, certains capteurs sont par ailleurs de technologie différente.

Avec le dispositif anticollision selon l'invention, il est tiré profit des avantages techniques de chaque capteur tout en s'affranchissant de la technologie et/ou de l'évolution technologique de capteur utilisé au moyen du module d'uniformisation mis en oeuvre. Un tel module d'uniformisation jouant le rôle d'interface entre, d'une part les capteurs, et d'autre part le coeur fonctionnel du dispositif anticollision à savoir le module de traitement tirant profit de la pluralité d'ensembles de données banalisées obtenus pour augmenter la pertinence et la zone de couverture de la détection d'obstruction opérée, et ce pour tout type d'obstruction.

Un tel système est pérenne car indépendant des évolutions technologiques ou de l'origine des capteurs propres à être ajoutés/remplacés tout au long de l'utilisation de l'aéronef.

Suivant d'autres aspects avantageux de l'invention, le dispositif anticollision est selon l'une quelconque des revendications 2 à 7.

L'invention a également pour objet un système avionique de protection d'un aéronef, selon la revendication 8.

Avec le système avionique de protection selon l'invention, le dispositif anticollision précédemment défini vient compléter un système existant d'avertissement et d'évitement du relief (TAWS ou HTAWS de l'anglais *Terrain Awareness & Warning System ou Helicopter Awareness & Warning System*) par exemple de manière à couvrir efficacement toutes les phases de vol, ce qui permet d'offrir une protection continue ou quasi-continue.

Par exemple, le dispositif anticollision précédemment défini est mis en oeuvre pour offrir une protection basse vitesse et un dispositif type TAWS, tel que décrit par exemple dans le brevet FR 2 773 609, est utilisé pour couvrir le reste des phases de vol de l'aéronef.

Autrement dit, dans le système avionique de protection selon l'invention le dispositif d'avertissement et d'évitement du relief et le dispositif anticollision selon l'invention se complètent et sont capables d'agir en cohésion de sorte à augmenter la sécurité globale de l'aéronef et de l'équipage, chaque dispositif contrebalançant les faiblesses de l'autre.

Suivant d'autres aspects avantageux de l'invention, le système avionique de protection comprend une ou plusieurs des caractéristiques suivantes, prises isolément ou suivant toutes les combinaisons techniquement possibles :

- le dispositif d'avertissement et d'évitement du relief et le dispositif anticollision sont propres à interagir ;
- le système avionique de protection comprend un dispositif de supervision configuré pour commander l'activation/désactivation du dispositif d'avertissement et d'évitement du relief et l'activation/désactivation du dispositif anticollision au moyen de ladite donnée d'entrée de même type ;
- le dispositif d'avertissement et d'évitement du relief et le dispositif anticollision sont propres à fonctionner indépendamment l'un de l'autre en utilisant au moins une donnée d'entrée de même type comme une donnée d'activation/désactivation.

L'invention a également pour objet un procédé d'anticollision d'un aéronef, selon la revendication 9 ou 10.

L'invention a également pour objet un programme d'ordinateur selon la revendication 11.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un dispositif anticollision selon l'invention ;
- la figure 2 illustre schématiquement la vision commune d'obstruction vue par deux capteurs distincts, l'un d'entre eux étant orienté à 90° de l'autre ;
- les figures 3 et 4 illustrent le principe de triangulation appliqué en utilisant trois capteurs disposés de manière décalée ;
- les figures 5 à 7 illustrent trois échantillons temporels successifs de prétraitement par fusion d'ensembles de données banalisées fournis par des capteurs distincts;
- les figures 8 et 9 illustrent le principe de seuils utilisé pour alerter/informer le pilote ;
- les figures 10 à 12 illustrent respectivement les zones de déplacement d'un aéronef et d'une obstruction mobile en cas de déplacement de l'aéronef en ligne droite ou selon un virage, et la détermination de niveau d'alerte associée ;
- la figure 13 illustre un contrôle vertical appliqué au cours d'une manoeuvre d'évitement ;
- les figures 14 à 17 illustrent différents exemples d'affichage propre à présenter les informations générées par le module de traitement du dispositif anticollision selon l'invention ;
- les figures 18 à 21 illustrent différents exemples d'architecture du système avionique de protection selon l'invention ;
- la figure 22 est une représentation schématique détaillée de l'exemple d'architecture de la figure 21 ;
- la figure 23 est un organigramme d'un procédé d'anticollision, selon l'invention.

Dans la suite de la description les expressions « sensiblement » ou « de l'ordre de » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

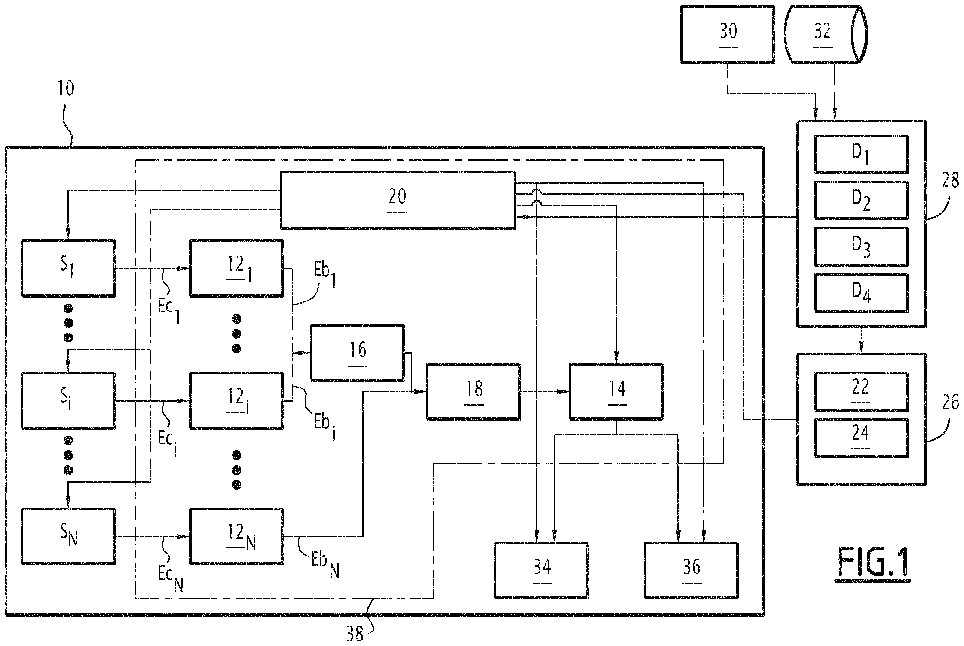

Sur la figure 1, un dispositif électronique anticollision 10, notamment destiné à être embarqué à bord d'un aéronef comprend, pour chaque capteur $S_1$ à $S_N$ d'une pluralité de N capteurs, un module 12 d'uniformisation de données propre à transformer au moins un ensemble de données captées $Ec_i$ en un ensemble de données banalisées (i.e. génériques) $Eb_i$ correspondant, chaque ensemble de données banalisées $Eb_i$ associé respectivement à chaque capteur $S_i$ étant formé d'une pluralité de types de données identiques d'un ensemble de données banalisées à l'autre.

De plus, le dispositif électronique anticollision 10 comprend un module 14 de traitement de données propre à générer, à partir desdits ensembles de données banalisées $Eb_1$, $Eb_2$, ..., $Eb_i$, ...$Eb_N$, au moins une information représentative de la présence ou de l'absence d'obstruction(s). Un tel module 14 de traitement de données est générique car il n'est propre à traiter que des types de données génériques obtenus du module d'uniformisation 12. Autrement dit, le module de traitement 14 est indépendant des technologies de capteurs mis en oeuvre sur l'aéronef.

En complément, tel que représenté sur la figure 1, le dispositif électronique anticollision 10 comprend également de manière optionnelle un module 16 de complétion propre à compléter, à partir d'un ensemble de données banalisées $Eb_i$ associé à un des capteurs $S_i$, au moins une valeur manquante associée à un type, de la pluralité de types de données identiques d'un ensemble de données banalisées $Eb_j$ d'un autre capteur $S_j$ de la pluralité de capteurs $S_1$, $S_2$, ..., $S_i$, ...$S_N$ de l'aéronef.

Comme illustré sur la figure 1, selon une variante, le module de complétion 16 est applicable à seulement une partie des ensembles de données banalisées obtenus (i.e. pas à la totalité des ensembles de données banalisées obtenus tel que par exemple l'ensemble de données banalisées $Eb_N$ fourni par le module d'uniformisation $12_N$ appliqué au capteur $S_N$) et selon une autre variante le module de complétion 16 est applicable à tous les ensembles de données banalisées obtenus.

Le dispositif électronique anticollision 10 comprend aussi un module de prétraitement 18 de données au moins propre à fusionner les données de tous les ensembles de données banalisées $Eb_1$, $Eb_2$, ..., $Eb_i$, ...$Eb_N$ en fonction d'une zone de détection associée à chaque capteur $S_1$, $S_2$, ..., $S_i$, ...$S_N$ et à les transmettre au module de traitement de données 14, et et/ou comprend optionnellement un module de supervision 20 propre à commander la pluralité de N capteurs $S_1$, $S_2$, ..., $S_i$, ...$S_N$ en fonction d'au moins un paramètre d'entrée appartenant au groupe comprenant au moins :

- un paramètre $D_1$ de configuration de capteur ;
- un paramètre $D_2$ de vol de l'aéronef ;
- un paramètre $D_3$ représentatif d'au moins une mission de l'aéronef ;
- un paramètre $D_4$ représentatif d'une commande de pilotage saisie par le pilote ;
- une information 22 représentative de la phase de vol courante de l'aéronef ;
- un paramètre 24 représentatif du mode opérationnel de pilotage.

Par paramètre de configuration $D_1$, on entend notamment le nombre N de capteurs, la position des capteurs sur l'aéronef, le champ de vision des capteurs (couverture angulaire, portée minimale et maximale de détection), la technologie des capteurs (optique, radar, caméra...), les dimensions de l'aéronef (longueur, largeur, taille des rotors), les plages de fonctionnement des capteurs (vitesse et hauteur), les marges pour le déclenchement d'information de type avertissement (de l'anglais awareness correspondant notamment à la distance à l'obstruction), les marges pour la signalisation d'alertes, les phases de vol/mode opérationnel d'usage des différents capteurs (selon la technologie et l'emplacement) contenant les informations d'inhibition et de puissance maximale d'émission de chaque capteur, les seuils et temps de confirmation pour les changements de phases de vol, les différents sons pouvant être produits pour informer l'équipage, et suivant les architectures, les priorités entre les alertes produites par le dispositif anticollision 10 et celles fournies par un dispositif de surveillance autre tel qu'un TAWS.

Par paramètre de vol de l'aéronef (de l'anglais *flight parameters*) $D_2$, on entend au moins le triplet de données comprenant la hauteur (i.e. l'altitude), le vecteur vitesse de et l'attitude (tangage, roulis, lacet) de l'aéronef, et en option une ou des informations représentatives de : la phase de vol, la variation du vecteur vitesse, la localisation de l'aéronef, des zones géographiques à usage restreint ou interdit pour les capteurs, des zones et type d'alertes TAWS : fournissant le type d'alerte terrain ou obstruction en cours délivré par un dispositif de type TAWS/ISS, ces alertes étant basées sur une comparaison entre la trajectoire anticipée de l'aéronef et un modèle numérique de terrain et non sur une acquisition de l'environnement réel de l'aéronef.

Par paramètre représentatif d'au moins une mission de l'aéronef $D_3$, on entend les données fournies par la base de données de mission 32 contenant les zones d'exclusion d'usage des différents capteurs (selon la technologie).

Par paramètre représentatif d'une commande de pilotage saisie par le pilote $D_4$, on entend les commandes pilotes de type marche / arrêt total par capteur et en option les commandes associées aux modes fonctionnels (un mode « en vol stationnaire » (de l'anglais *hoover,* et un mode « hélitreuillage » (de l'anglais *winching*) par exemple), d'inhibition totale ou temporaire, de modulation des seuils de puissance des émissions du capteur, etc.

L'information représentative de la phase de vol courante 22 de l'aéronef et le paramètre représentatif du mode opérationnel de pilotage 24 sont fournis par exemple tel qu'illustré par la figure 1 par un module 26 de gestion de mode de pilotage.

Les paramètres d'entrées $D_1$ à $D_4$ sont générés par un module 28 de gestion des paramètres d'entrées alimenté notamment par une interface 30 de saisie de commande(s) de pilotage (ou IHM Interface Homme-Machine) et par une base de données 32 concentrant des données associées à une pluralité de mission(s) potentielle(s) de l'aéronef.

Dans le cas d'un aéronef correspondant à un drone les paramètres d'entrées $D_1$ à $D_4$ saisis par un

pilote sont transmis via une liaison de données non représentée entre une station sol et l'aéronef.

De plus, selon l'exemple de la figure 1, le dispositif électronique anticollision comprend également un module d'affichage 34 et/ou un module de restitution sonore 36 propre à restituer à au moins un membre d'équipage ou au pilote l'information représentative de la présence ou de l'absence d'obstruction(s) déterminée par le module de traitement de données 14.

Un tel module d'affichage 34 intègre par exemple un écran tête basse ou tête haute (de l'anglais *head-up, head worn display*) ou est en liaison avec un écran déporté dans un sac de vol électronique (EFB de l'anglais *electronic flight bag*) ou tel qu'une tablette additionnelle).

Le module 26 de gestion de mode de pilotage est propre à calculer les différents modes opérationnels à partir des entrées saisies par l'équipage dans l'interface 30 et des paramètres de vol $D_2$ de l'aéronef. Le basculement d'un mode vers l'autre est soit direct par exemple, par sélection manuelle du pilote du mode stationnaire ou forcé automatiquement par le module 26 de gestion de mode de pilotage en se basant sur une combinaison de paramètres de vol $D_2$, par exemple en cas de position stable à une certaine hauteur sol, le mode stationnaire est activé automatiquement.

Les différents modes et leurs critères de sélection sont intégrés dans les paramètres de configuration $D_1$ et comprennent notamment des modes de vol tel que « vol à basse altitude » (de l'anglais *Low Level Flight*), «vol stationnaire » (de l'anglais *hoover*), « hélitreuillage » (de l'anglais *winching*), « recherche et sauvetage » (de l'anglais *search and rescue*), « vol tactique » (de l'anglais *tactical Flight*) ou des modes d'émission d'information d'aide au pilotage jouant sur les sorties délivrées tel qu'un mode « affichage exclusif » (de l'anglais *display mode*) inhibant les sorties module de restitution sonore 36, le mode « alerte » produisant uniquement des informations de type alerte et le mode « Information » (de l'anglais *Awareness*) qui ne produira que des avertissement et pas d'alerte ainsi que le mode « bloqué/temporairement bloqué » (de l'anglais *inhibit/temporary inhibit*) propre à inhiber une génération d'information durant un laps de temps limité.

Selon une variante correspondant à l'ensemble 38, les capteurs $S_1$, $S_2$, ..., $S_i$, ...$S_N$ et/ou le module d'affichage 34 et/ou le module de restitution sonore 36 ne sont pas intégrés au sein du dispositif anticollision 10 mais à l'extérieur de celui-ci, et sont connectés au moyen de liaison(s), filaire(s) ou non, à ce dispositif anticollision 10.

En d'autres termes, selon cette variante, les capteurs $S_1$, $S_2$, ..., $S_i$, ...$S_N$ et/ou le module d'affichage 34 et/ou le module de restitution sonore 36 sont par exemple intégrés au sein de l'aéronef et utilisés par d'autres dispositifs par exemple pour des fonctions complémentaires d'assistance au pilotage.

Selon une autre variante, notamment lorsque l'aéronef est un drone dépourvu de pilote humain dans son habitacle, le module d'affichage 34 et/ou le module de restitution sonore 36 sont localisés au sein d'une plateforme de contrôle au sol et l'information représentative de la présence ou de l'absence d'obstruction(s) déterminée par le module de traitement de données 14 est communiquée via un module d'émission/réception (non représenté) du drone, un tel module d'émission/réception étant propre à être intégré au sein du dispositif anticollision 10 selon un aspect ou en dehors du dispositif anticollision 10.

Dans l'exemple de la figure 1, le dispositif anticollision 10, 38 comprend une unité de traitement d'informations, non représentée, formée par exemple d'une mémoire et d'un processeur associé à la mémoire.

Dans l'exemple de la figure 1, le module d'uniformisation 12, le module de traitement 14, le module de complétion 16, le module de prétraitement 18 et le module de supervision 20 sont réalisés chacun sous forme d'un logiciel, ou d'une brique logicielle, exécutables par le processeur. Chacun de ces modules 12, 14, 16, 18, 20 sont chacun propres à mettre en oeuvre automatiquement (i.e. sans intervention humaine) des traitements dédiés décrits ci-après.

La mémoire du dispositif électronique anticollision 10 est alors apte à stocker un logiciel d'uniformisation de données propre à transformer au moins un ensemble de données captées $Ec_i$ en un ensemble de données banalisées $Eb_i$ correspondant, chaque ensemble de données banalisées $Eb_i$ associé respectivement à chaque capteur $S_i$ étant formé d'une pluralité de types de données identiques d'un ensemble de données banalisées à l'autre, un logiciel de traitement de données propre à générer, à partir desdits ensembles de données banalisées $Eb_1$, $Eb_2$, ..., $Eb_i$, ...$Eb_N$, au moins une information représentative de la présence ou de l'absence d'obstruction(s), un logiciel de complétion propre à compléter, à partir d'un ensemble de données banalisées $Eb_i$ associé à un des capteurs $S_i$, au moins une valeur manquante associée à un type, de la pluralité de types de données identiques d'un ensemble de données banalisées $Eb_j$ d'un autre capteur $S_j$ de la pluralité de capteurs $S_1$, $S_2$, ..., $S_i$, ...$S_N$ de l'aéronef, un logiciel de prétraitement propre à fusionner les données de tous les ensembles de données banalisées $Eb_1$, $Eb_2$, ..., $Eb_i$, ...$Eb_N$ en fonction d'une zone de détection associée à chaque capteur $S_1$, $S_2$, ..., $S_i$, ...$S_N$ et à les transmettre au module logiciel de traitement de données 14, et un logiciel de supervision propre à commander la pluralité de capteurs $S_1$, $S_2$, ..., $S_i$, ...$S_N$ en fonction d'au moins un paramètre d'entrée appartenant au groupe comprenant au moins un paramètre de configuration de capteur, un paramètre de vol de l'aéronef, une information représentative de la phase de vol courante de l'aéronef, un paramètre représentatif du mode opérationnel de pilotage, un paramètre représentatif d'au moins une mission de l'aéronef.

Le processeur est alors apte à exécuter chacun des logiciels parmi le logiciel d'uniformisation, le logiciel de traitement, le logiciel de complétion, le logiciel de prétraitement et le logiciel de supervision.

En variante non représentée, le module d'uniformisation 12, le module de traitement 14, le module de complétion 16, le module de prétraitement 18 et le module de supervision 20 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif anticollision 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

La pluralité de capteurs $S_1$, $S_2$, ..., $S_i$, ...$S_N$ comprend par exemple des capteurs positionnés au-dessous de l'aéronef notamment lorsqu'il s'agit d'un hélicoptère dont le dessous est une partie exposée, et/ou des capteurs installés sur les côtés de fuselage car les axes latéraux sont également exposés aux obstructions, et/ou des capteurs installés sur la queue de l'aéronef correspondant notamment à l'une des parties les plus exposées de l'aéronef et non visible de l'équipage, de tels capteurs permettant de détecter à la fois des obstructions au niveau de l'axe latéral, de l'axe vertical et au niveau de l'axe arrière de l'aéronef.

L'ensemble de N capteurs $S_1$, $S_2$, ..., $S_i$, ...$S_N$ est propre à comprendre des capteurs de technologies identiques par exemple des radars en des positions distinctes ou des capteurs de technologies distinctes et/ou de fabricants distincts permettant de panacher les radars, les capteurs électro-optiques tels que des camera, des capteurs infra-rouge ou dans le domaine visible, des lidars, un laser 3D flash, ou encore des capteurs à ultrasons.

Le nombre et les types de capteurs actifs installés sur l'aéronef définissent le nombre d'axes considérés pour la protection et la zone de couverture associée.

De manière avantageuse, le chevauchement entre les zones de détection d'un ou plusieurs capteurs est mis en oeuvre pour effectuer de la corrélation lors d'un regroupement de données afin de réduire le taux de fausse détection (nuisance).

Suivant les applications du dispositif anticollision 10 visées, un tel chevauchement découle directement et naturellement du champ de vision des capteurs et du nombre de capteurs nécessaires pour couvrir la zone de protection désirée, ou est optimisé pour minimiser la nuisance dans certaines zones (par exemple à l'avant de l'aéronef).

Des positions systématiques d'installation de capteur sont par exemple utilisées à des fins d'accélération de la certification d'aéronef. Par exemple, pour un aéronef à voilure fixe, les capteurs sont installés en bout d'aile et sous le nez de l'aéronef, avec la possibilité d'être co-localisés avec des éléments d'éclairage de l'aéronef à voilure fixe.

Pour un aéronef à voilure tournante, les capteurs sont par exemple installés sur le corps de l'aéronef ou sous le nez de celui-ci en dernier recours (afin de limiter la trainée aérodynamique). De manière préférentielle, les capteurs sont installés sur les patins de l'aéronef si celui-ci en dispose. Une telle configuration d'installation des capteurs permet de limiter l'impact sur la structure d'aéronef à voilure tournante et simplifie également le passage des câbles nécessaires à l'alimentation des capteurs.

Pour un aéronef à voilure fixe, comme à voilure tournante, une installation sous l'aéronef d'un capteur, correspondant à un assemblage permettant de combiner deux caméras pour filmer en relief 3D (de l'anglais *caméra rig*), est par exemple également mise en oeuvre.

Certains capteurs achetés auprès d'un fournisseur COTS (de l'anglais *Commercial Off-The-Shelf*), utilisés notamment de par leur coût modéré, tels que les radars automobiles dont les antennes de réception des radars sont disposées de manière longitudinale, ne permettent de remonter des données de type azimut, distance, que dans un plan, par exemple horizontal.

Pour y remédier, une combinaison de deux capteurs identiques, par exemple deux radars, disposés de sorte que leur champ de vision respectif soit décalé de 90° l'un par rapport à l'autre est mis en oeuvre, formant ainsi un premier type de « macro-capteur » virtuel dont le champ de vision effectif correspond à l'intersection des deux champs de vision des deux capteurs le formant.

Un premier radar de ce macro-capteur détecte les obstructions potentielles et fournit leur azimut horizontal, la distance entre l'obstruction et l'aéronef, la taille estimée ainsi que le vecteur vitesse associé. Le second radar de ce macro-capteur détecte également les mêmes obstructions, fournit leur azimut vertical, la distance entre l'obstruction et l'aéronef, la taille estimée ainsi que le vecteur vitesse associé.

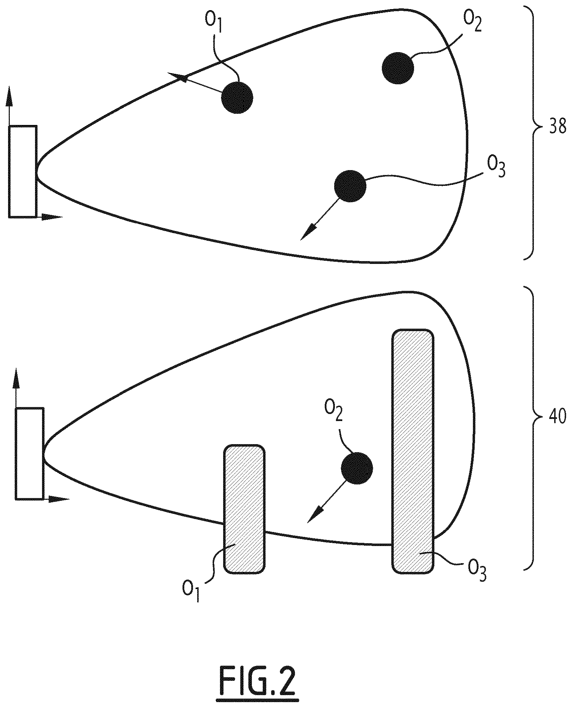

La figure 2 illustre schématiquement la vision commune d'obstructions $O_1$, $O_2$, $O_3$ vues par ces deux radars distincts, dans le plan horizontal 38 délivré par exemple par le premier radar, et dans le plan vertical 40 délivré par exemple par le second radar orienté de 90° par rapport au premier radar.

Les paramètres d'obstruction délivrés par chacun des radars formant le macro-capteur sont priorisés pour associer la même obstruction, par exemple $O_1$, à la fois dans le plan horizontal 38 et dans le plan vertical 40. Par exemple, la valeur de la vitesse absolue d'obstruction délivrée par les deux radars est premièrement utilisée, puis la distance d'obstruction à l'aéronef, puis la taille (la taille étant moins prioritaire et pouvant différer pour une même obstruction entre la taille vue sur le plan horizontal 38 et celle vue sur le plan vertical 40).

Autrement dit, deux obstructions détectées respectivement par chacun des radars et présentant d'abord un vecteur vitesse longitudinal relatif similaire en direction (i.e. représentatif d'un rapprochement, d'un éloignement, d'une position stationnaire) et en norme sont considérées comme pouvant être potentiellement associée à une même obstruction, ce qui est ensuite confirmé lorsque la distance aéronef-obstruction est identique ou quasi identique et éventuellement reconfirmé par la taille détectée. En effet, deux obstructions ayant la même vitesse de déplacement, situés à la même distance et ayant la même taille présentent une probabilité d'être identiques supérieure à 90%.

Le second radar propre à délivrer de l'information dans le plan vertical 40 intervient pour compléter les informations du premier radar (et non l'inverse) car, selon un aspect particulier de l'invention, l'information sur l'emplacement horizontal de l'obstruction est jugée plus importante que l'information de hauteur.

Une telle première solution de macro-capteur basé sur deux radars dont l'orientation est décalée de 90° l'un par rapport à l'autre est propre à apporter une information de hauteur à moindre coût.

Les informations étant ramenées dans un plan, deux obstructions fixes de hauteur différentes et situées à égale distance de l'aéronef, sont propres à être temporairement perçues par un tel macro-capteur, de manière erronée, comme ayant toutes deux la même hauteur (i.e. celle la plus élevée) mais, en raison de la dynamique de vol de l'aéronef, la distance égale dans les deux plans 38 et 40 n'est pas propre à être maintenue indéfiniment, si bien qu'en absence d'un tel maintien, les deux obstructions sont propres à être vues avec leur hauteur réelle respective.

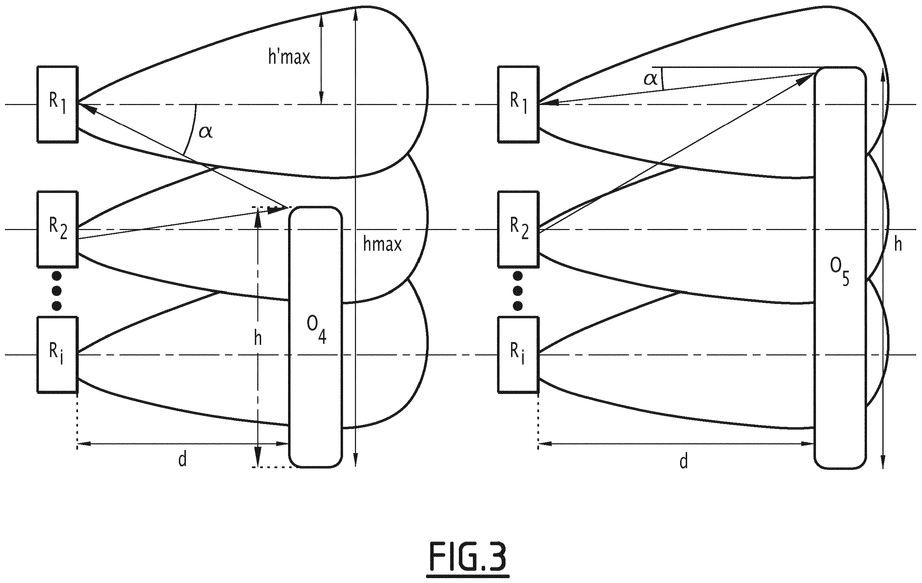

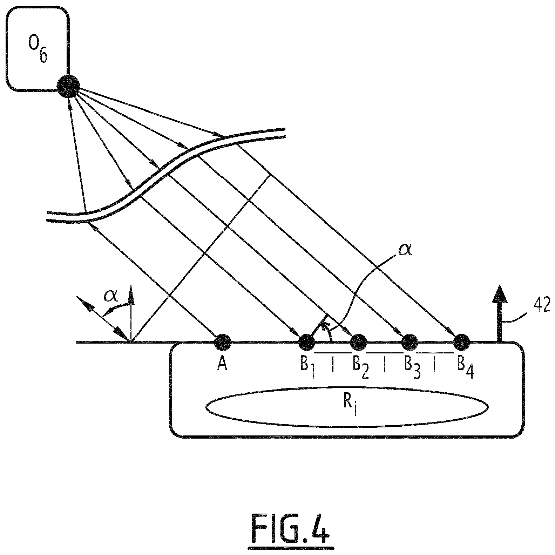

Pour pallier, une telle perception erronée temporaire du premier type de macro-capteur basé sur l'utilisation de deux radars, un autre agencement de capteur(s) est propre à être mis en oeuvre selon l'invention à titre de variante, et est basé sur un deuxième type de macro-capteur virtuel formé d'au moins trois capteurs COTS disposés en décalé au moins verticalement et propre à appliquer une triangulation illustrée par les figures 3 et 4 décrites ci-après. Chaque capteur du deuxième type de macro-capteur est propre à acquérir les impulsions émises par les autres capteurs tout en identifiant leur origine de manière distincte. De plus, les différents capteurs partagent la même référence temporelle et opèrent sur les mêmes plages de fréquences.

De manière générale, le module d'uniformisation 12 est configuré pour traiter un signal fourni par un des capteurs en banalisant ce signal de sorte à fournir ensuite au module de traitement 14 des données uniformes et indépendantes de la technologie de capteur utilisée.

Selon un aspect particulier, le module d'uniformisation 12 est également propre à consolider les informations acquises par chaque capteur (ou macro-capteur) de manière à éliminer le bruit environnant (e.g. faux échos radars, pollution lumineuse..) inhérent à la technologie du capteur utilisé. En option, le module d'uniformisation 12 fournit également un suivi d'obstructions(s).

Autrement dit, le module d'uniformisation 12 joue le rôle d'interface entre un capteur ou un macro-capteur et le module de traitement 14 de sorte à lui présenter des données de même nature quel que soit la technologie de capteur utilisée ou son origine de fabrication.

Selon une première variante telle qu'illustrée sur la figure 1, le dispositif anticollision 10 (ou 38) comprend autant de modules d'uniformisation 12 que de capteurs à savoir le nombre entier N.

Selon un aspect particulier de cette première variante, le module d'uniformisation 12 est également en charge de réaliser un premier filtrage des données délivrées (i.e. captées) par le capteur auquel il est associé de sorte que chaque module d'uniformisation 12, fournit en sortie un ensemble de M données banalisées de même nature.

Un tel module d'uniformisation 12 est propre à la technologie et au(x) fabricant(s) de capteur auquel il est associé, car capable d'analyser les données fournies pas un tel capteur pour les transformer en donnée de même type d'un capteur à l'autre.

Autrement dit, un module d'uniformisation $12_i$ associé à un capteur $S_i$ correspondant à un radar et un module d'uniformisation $12_j$ associé à un capteur $S_j$ correspondant à un capteur à ultra-sons est propre à délivrer en présence d'une obstruction détectée par chacun des capteurs $S_i$ et $S_j$ auquel il est associé un ensemble de données $Eb_i$ et $Eb_j$ de types identiques et de valeurs distinctes associées respectivement à chaque capteur $S_i$ et $S_j$. Le traitement mis en oeuvre par le coeur fonctionnel du dispositif anticollision 10, à savoir le module de traitement 14 recevant de de tels ensembles de données banalisées d'entrée est alors simplifié ce qui lui permet de s'affranchir de toute dépendance à la nature ou à l'origine du capteur utilisé et de se concentrer sur la délivrance fiable d'une information représentative du risque de collision encouru par n'importe quelle zone de l'aéronef.

En termes d'architecture physique, le module d'uniformisation $12_i$ est localisé au plus près du capteur $S_i$ auquel il est associé, voire intégré dans celui-ci (non représenté).

En particulier, la pluralité de types de données identiques comprend au moins les trois types de données fonctionnelles suivants, en présence d'une obstruction détectée :

- au moins une donnée représentative d'une position d'obstruction ;
- au moins une donnée représentative de la probabilité de détection d'obstruction ;

- au moins une donnée représentative de la taille d'obstruction (e.g. catégorie petite taille si elle présente une dimension inférieure à un premier seuil de taille prédéterminé, catégorie taille moyenne si elle présente une dimension comprise entre ledit premier seuil de taille prédéterminé et un deuxième seuil de taille prédéterminé, catégorie grande taille si elle présente une dimension supérieure au deuxième seuil de taille prédéterminé, ou directement les dimensions de l'obstruction si la technologie du capteur associé le permet).

De manière optionnelle, notamment pour fournir un suivi d'obstruction(s), c'est trois types de données sont complétés par les types additionnels de données fonctionnelles suivants :

- un identifiant de l'obstruction ;
- une donnée représentative du vecteur vitesse de la ou des obstruction(s) détectée(s). On entend ici le vecteur vitesse absolue, indépendamment du déplacement de l'aéronef (direction en 2D ou 3D et valeur normée) ;
- une donnée représentative de la variation du vecteur vitesse de la ou des obstruction(s) détectée(s), (e.g. changement de direction, réduction/augmentation/pas de changement, etc.) ;
- une donnée représentative de la variation de la distance entre obstruction(s) et a aéronef (e.g. pas de changement, augmentation/réduction de la distance), ce qui correspond globalement au vecteur vitesse relatif (prenant en compte le déplacement de l'aéronef) ;
- une donnée représentative de la hauteur (i.e. l'élévation) de l'obstruction, (lorsque la technologie du capteur associé le permet, par hauteur on entend la hauteur relative à l'aéronef) ;
- une donnée représentative du gisement correspondant à l'angle entre la direction de l'obstruction et l'axe longitudinal de l'aéronef ;
- une donnée représentative du vecteur vitesse de l'aéronef (la donnée comprenant la direction 2D ou 3D et la norme du vecteur si la technologie du capteur associé le permet) ;
- une donnée représentative de la variation du vecteur vitesse de l'aéronef (si la technologie du capteur associé le permet).

De plus, de manière optionnelle, pour chacune des données représentatives concernées, un pourcentage d'incertitude est optionnellement associé à la valeur mesurée par le capteur considéré.

Selon une deuxième variante, non représentée, mettant en oeuvre un ou des de macro-capteur(s) virtuel(s) basés sur la combinaison de deux capteurs COTS ou de trois capteurs COTS, le module d'uniformisation 12 associé à chaque macro-capteur présente une architecture distribuée non représentée comprenant d'une part pour chaque capteur du macro-capteur un premier élément (ou bloc logiciel) propre à réaliser la réception, l'acquisition et le traitement du signal émis par les capteurs formant le macro-capteur virtuel, un tel premier élément étant spécifique au type de capteur considéré.

D'autre part, le module d'uniformisation 12, selon cette deuxième variante, comprend un deuxième élément (ou bloc logiciel) propre à traiter les données délivrées par le premier élément associé à chaque capteur du macro-capteur pour produire en sortie, par macro-capteur, une donnée fonctionnelle banalisée (i.e. générique) tridimensionnelle (3D) complète.

Par exemple pour un macro-capteur formé d'au moins trois capteurs $R_1$, $R_2$, $R_3$, La résolution étant directement liée au nombre de capteurs, tel qu'illustré par la figure 3, pour fournir la donnée représentative de la hauteur $h$ d'une obstruction $O_1$, $O_2$, le module d'uniformisation 12 est propre à se baser sur un quadruplet de données comprenant, par exemple, la position des capteurs $R_1$ à $R_i$, l'identification du ou des capteur(s) qui ont détecté l'obstruction à partir de leurs seules émissions et/ou de l'ensemble des émissions, la distance à laquelle est vue l'obstruction.

En combinant ces données avec les paramètres de vol de l'aéronef tel que la hauteur (i.e. l'altitude de vol) de l'aéronef, le module d'uniformisation 12 est propre à déterminer par géométrie à quelle hauteur approximative se situe l'obstruction $O_4$ ou $O_3$, ou Oe tel qu'illustré par les figures 3 et 4 illustrant respectivement le principe bien connu de triangulation et de détermination d'azimut dans le plan.

En particulier, sur la figure 4, un radar comprend une antenne émettrice A et quatre antennes réceptrices $B_1$ à $B_4$ chacune espacé d'une distance $l$. L'angle $\alpha$ correspondant à l'angle entre la normale 42 au capteur $R_i$ et l'émission réfléchie par le sommet de l'obstruction $O_6$ est tel que $\alpha = \arcsin(p/l)$ avec $p = (\varphi_{B1} - \varphi_{B2})\lambda/2\pi$ où $\varphi_{B1}$, $\varphi_{B2}$ sont les angles azimutal horizontaux de chaque antenne de réception et $\lambda$ la longueur d'onde.

La hauteur de l'obstruction est donc déterminée par :

$$ h = hmax - \sum_j h' \max - \tan(alpha) * d $$

où hmax est fonction de h'max correspondant à la hauteur de champ de vision et de la hauteur (radio altitude) de l'aéronef, $\sum_j h'max$ correspond la hauteur totale des demi-zones non intersectées par l'obstruction (s'il y en a), $d$ correspond à la distance à laquelle l'obstruction est perçue.

Selon cette deuxième variante basée sur l'utilisation de macro-capteur, le module optionnel 16 de complétion propre à compléter l'ensemble de données banalisées d'un capteur avec celle d'un autre capteur n'est pas mis en oeuvre au vu de l'utilisation du deuxième élément du module d'uniformisation 12.

Le module de prétraitement 18 de données est au moins propre à fusionner les données de tous les ensembles de données banalisées $Eb_1$, $Eb_2$, ..., $Eb_i$, ...$Eb_N$ en fonction d'une zone de détection associée à chaque capteur $S_1$, $S_2$, ..., $S_i$, ...$S_N$ et à les transmettre au module de traitement de données 14 est mis en oeuvre pour adresser une protection plus ou moins complète de la périphérie du porteur.

Plus précisément, un tel module de prétraitement 18 est premièrement propre à ajouter un niveau de filtrage temporel à la sortie du module d'uniformisation 12 ou à la sortie du module optionnel 16 de complétion, pour éliminer les obstructions présentes pendant une durée inférieure à une durée prédéfinie, la valeur d'une telle durée prédéfinie étant propre à varier en fonction de la vitesse absolue de l'aéronef.

En outre, le module de prétraitement 18 est configuré pour comparer la fusion des données de tous les ensembles de données banalisées $Eb_1$, $Eb_2$, ..., $Eb_i$, ...$Eb_N$ à un historique de données fusionnées préalablement mémorisé au sein de la mémoire du dispositif anticollision 10.

Pour une fusion des données de tous les ensembles de données banalisées à un instant t, le module de prétraitement 18 est propre à mettre en oeuvre successivement : le tri des obstructions de cette fusion courante, et ce par position de chaque obstruction, puis l'attribution d'un identifiant d'obstruction, puis la fusion des obstructions détectées par les différents capteurs, la concaténation des obstructions dont les zones de détection sont contiguës sans chevauchement, et la fusion d'obstructions en fonction de leur position, de leur taille et de leur vitesse lorsque les zones de détection se chevauchent ; deux obstructions de tailles similaires situées dans une zone voisine et avec un vecteur vitesse similaire (cap et norme), étant considérées identiques comme décrit précédemment.

Une tolérance configurable est appliquée sur chaque paramètre de fusion (incertitude sur la zone de détection, tolérance sur la taille (une catégorie de taille de différence par exemple) et sur le vecteur vitesse (+/- 10° en direction et +/- 15kts en valeur par exemple).

Selon un aspect particulier, si au cours du traitement de fusion propre à être mis en oeuvre par le module de prétraitement 18, une obstruction sans identifiant est considérée comme assimilable à une obstruction ayant déjà un identifiant, l'identifiant existant le plus faible en valeur est conservé. Si les deux obstructions ne sont pas considérées identiques, elles gardent chacune leur identifiant.

Selon un aspect particulier, lorsque le module de prétraitement 18 ne dispose pas de la donnée vitesse (en raison de la technologie de capteur), une tolérance plus grande est propre à être appliquée sur la position des obstructions. Ainsi, si une obstruction est détectée par un unique capteur de la pluralité de capteurs $S_1$, $S_2$, ..., $S_i$, ...$S_N$, l'obstruction ainsi détectée est propre à être prise en compte par le module de prétraitement 18 en fonction d'une incertitude associée correspondant à une probabilité de présence, en l'espèce si la probabilité de présence est inférieure à un seuil de probabilité prédéterminé, l'obstruction est propre à être éliminée.

Chaque fusion associée à son instant d'obtention est conservée de manière à former un historique utilisable par le module de prétraitement 18.

Selon un aspect particulier, la profondeur de l'historique est déterminée de manière à couvrir au moins trois acquisitions du capteur le plus lent. Plus précisément, si un capteur réalise une acquisition toutes les 500ms et un autre capteur une acquisition toutes les 50ms, alors l'historique aura une profondeur minimale de 3*500ms = 1,5s.

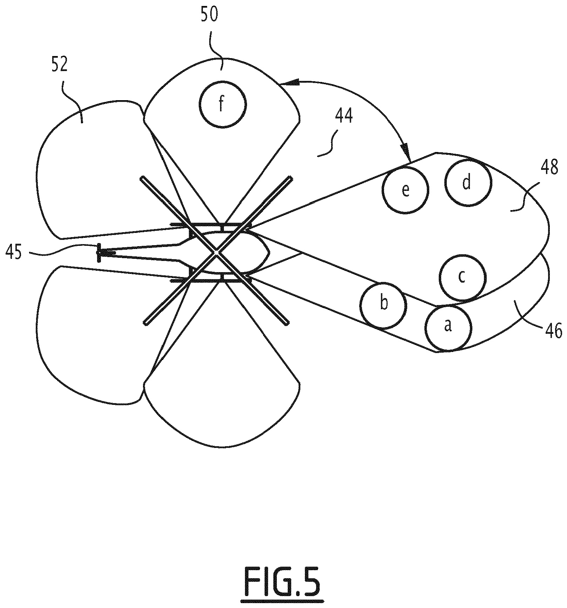

Cette profondeur d'historique est également propre à prendre en compte la couverture de la zone blanche 44 la plus importante illustrée sur la figure 5 dans le cas d'un aéronef à voilure tournante. Pour déterminer celle-ci, on prendra l'ouverture angulaire de la zone blanche que l'on divisera par une vitesse minimale d'évolution moyenne de rotation de l'aéronef. Par ex, si la zone blanche fait 20° et que l'on considère une vitesse de rotation minimale de 18°/s, une profondeur d'historique de 1,7s est appliquée car supérieure à la profondeur minimale de 1,5s précédemment définie.

Par ailleurs, le pas de l'historique correspond, par exemple, à la fréquence du capteur le plus rapide.

A chaque fusion, le module de prétraitement 18 est propre à comparer le résultat de la fusion courante à celui des différents éléments de l'historique. Lors de cette comparaison, la période entre deux échantillons de fusion est, selon l'invention, inférieure à une valeur temporelle prédéterminée, permettant l'application de l'hypothèse selon laquelle le vecteur vitesse de l'obstruction est quasiment constant. Selon cette hypothèse, le module de prétraitement 18 est alors propre à mettre en oeuvre un suivi d'obstruction à partir de l'historique en projetant une obstruction de l'historique dans la fusion la plus récente.

Une telle projection, propre à être mise en oeuvre par le module de prétraitement 18, pour chaque échantillon de l'historique, comprend :

- le déplacement de l'obstruction le long de son vecteur vitesse d'une durée égale à la période entre deux fusions considérées de l'historique, l'aéronef étant considéré statique, puis
- la correction du point d'arrivée du déplacement de l'obstruction en prenant en compte le déplacement de l'aéronef entre deux fusions (par exemple pour un aéronef à voilure tournante la rotation éventuelle selon trois axes (tangage, roulis, lacet) et/ou un mouvement de translation), ces données de déplacement de l'aéronef étant soit issues des capteurs $S_1$, $S_2$, ..., $S_i$, ...$S_N$ (selon la technologie utilisée), soit fournies par un module externe (non représenté et de type centrale inertielle par exemple), intégré ou non au dispositif anticollision 10 selon l'invention, et enfin

- l'analyse des obstructions ainsi obtenues par comparaison avec les obstructions de la fusion courante en utilisant les mêmes principes que ceux de la fusion, à savoir que deux obstructions de tailles similaires situées dans une zone voisine et avec un vecteur vitesse similaire, sont considérés identiques, et qu'une tolérance configurable est applicable à chaque paramètres de fusion (incertitude sur la zone de détection, tolérance sur la taille (une catégorie de différence par ex) et sur le vecteur vitesse (+/- 10° en direction (i.e. cap) et +/- 15kts en valeur par ex). Lors de cette étape, un identifiant unique est attribué à chaque obstruction. Si une obstruction de l'historique est considérée comme assimilable à une obstruction de la fusion courante, l'identifiant de l'historique est conservé pour l'obstruction de la fusion courante. Sinon, seule l'obstruction de la fusion courante est conservée avec l'ensemble de ses caractéristiques y compris son identifiant.

Au cours de cette opération de comparaison, le module de prétraitement 18 est propre à déduire une variation de la distance entre l'obstruction et l'aéronef (comparaison de la position relative de l'obstruction à celle de l'aéronef).

Le module de prétraitement 18 fournit donc une vision de synthèse de l'environnement de l'aéronef ainsi que des obstructions identifiées et suivies dans le temps avec leurs caractéristiques, à savoir : identifiant de l'obstruction, capteur(s) ayant détecté(s) l'obstruction, position de l'obstruction, taille de l'obstruction, probabilité d'existence, élévation (suivant le type de capteur), vecteur vitesse de l'obstruction (suivant le type de capteur ou issu de la mesure du déplacement de l'obstruction entre deux échantillons) et variation de la distance entre l'obstruction et l'aéronef.

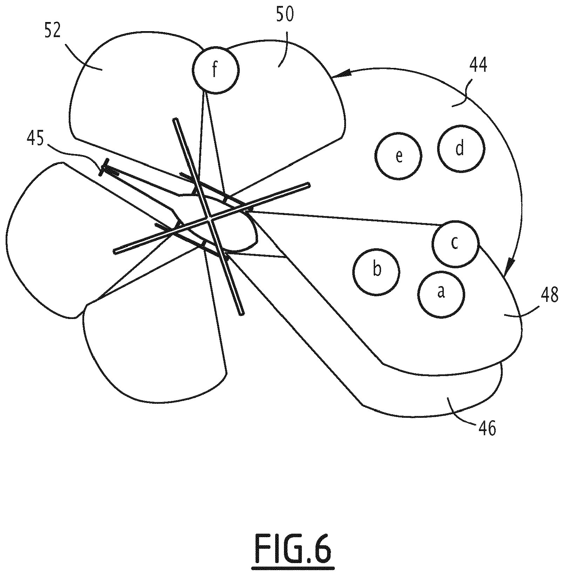

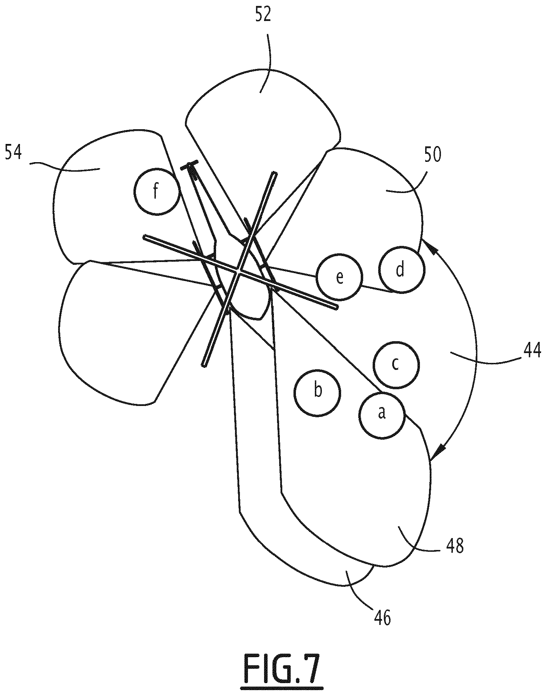

Les figures 5 à 7 illustrent trois échantillons distincts et successifs d'un tel historique. Sur ces trois figures six obstructions distinctes, a, b, c, d, e, f sont représentées ainsi que les zones de couvertures associées respectivement à six capteurs installés sur l'aéronef 45. La figure 5 représente l'échantillon le plus ancien, la figure 6 représente un échantillon intermédiaire, et la figure 7 représente le dernier échantillon des trois échantillons successifs illustrés.

Sur la figure 5 correspondant à un instant $T_0$ de mise en oeuvre du prétraitement par le module de prétraitement 18, le capteur associé à la zone de couverture 46 détecte trois obstructions a, b, c, le capteur associé à la zone de couverture 48 détecte trois obstructions c, d, e, et le capteur associé à la zone de couverture 50 détecte une obstruction f. Il résulte du prétraitement de fusion associé à cet instant $T_0$ l'identification des six obstructions a, b, c, d, e, f qui initialisent le suivi d'obstruction.

Sur la figure 6 correspondant à l'instant $T_1$ suivant de mise en oeuvre du prétraitement par le module de prétraitement 18, l'aéronef 45 s'est déplacé, notamment par rotation autour de l'axe de lacet, le capteur associé à la zone de couverture 46 ne détecte plus que deux obstructions a, b, le capteur associé à la zone de couverture 48 détecte trois obstructions a, b, c, les capteurs associés respectivement aux zones de couverture 50 et 52 détectent la même obstruction f. Il résulte du prétraitement de fusion associé à cet instant $T_1$ l'identification de quatre obstructions a, b, c et f, les obstructions e, f, n'étant pas détectées à cet instant $T_1$ car présentes dans la zone blanche 44, mais le suivi d'obstruction pallie cette faille de détection en se référant à l'échantillon de l'instant $T_0$ précédent.

Sur la figure 7 correspondant à l'instant $T_2$ suivant de mise en oeuvre du prétraitement par le module de prétraitement 18, l'aéronef 45 s'est à nouveau déplacé, notamment par rotation autour de l'axe de lacet, le capteur associé à la zone de couverture 46 ne détecte plus qu'une obstruction b, le capteur associé à la zone de couverture 48 détecte deux obstructions a, b, le capteur associé à la zone de couverture 50 détecte deux obstructions e et d, et le capteur associé à la zone de couverture 54 détecte l'obstruction f. Il résulte du prétraitement de fusion associé à cet instant $T_2$ l'identification de cinq obstructions, a, b, d, e et f, l'obstruction c, n'étant pas détectée à cet instant $T_2$ car présente dans la zone blanche 44, mais avantageusement le suivi d'obstruction mis en oeuvre par le module de prétraitement 18 pallie cette faille de détection en se référant aux échantillons de l'historique obtenus aux instants $T_0$ et $T_1$ précédents.

Le module de traitement de données 14 est propre à générer, à partir desdits ensembles de données banalisées $Eb_1$, $Eb_2$, ..., $Eb_i$, ...$Eb_N$, le cas échéant complétés par le module de complétion 16, et/ou le cas échéant prétraités par le module de prétraitement 18, au moins une information représentative de l'évaluation d'un niveau de risque correspondant à la présence ou à l'absence d'obstruction et une information d'alerte le cas échéant.

Autrement dit, le module de traitement de données 14 est notamment propre à déterminer la dangerosité de la situation et à calculer des marges restantes entre l'aéronef et chacune des différentes obstructions situées dans l'environnement proche de l'aéronef, pour informer l'équipage en présence/absence d'obstruction à risque et l'alerter le cas échéant.

Selon un aspect optionnel, lorsqu'au moins un des capteurs $S_1$, $S_2$, ..., $S_i$, ...$S_N$ de l'aéronef est propre à déterminer la vitesse relative d'une obstruction, le module de traitement de données 14 est également propre à générer une information représentative de la présence ou de l'absence de dérive de l'aéronef en vol stationnaire.

Autrement dit, selon cette option, le module de traitement de données 14 est propre à informer l'équipage ou à tout le moins le pilote de l'aéronef d'une dérive éventuelle d'un aéronef à voilure tournante propre à mettre en oeuvre une phase de vol stationnaire.

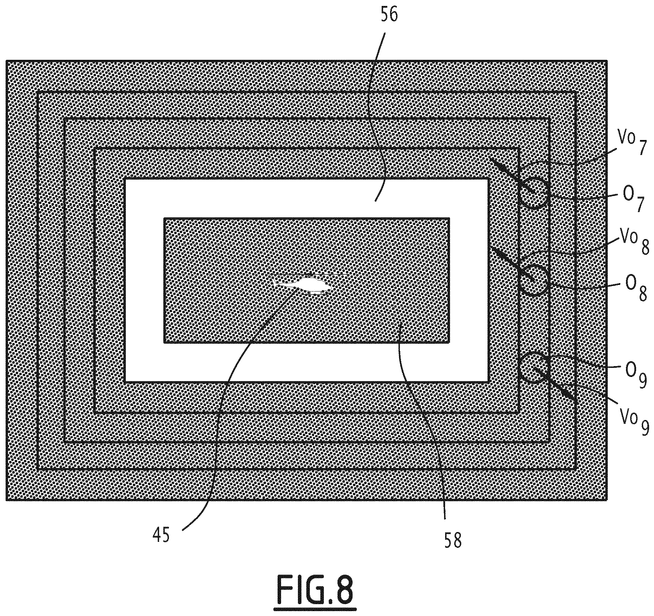

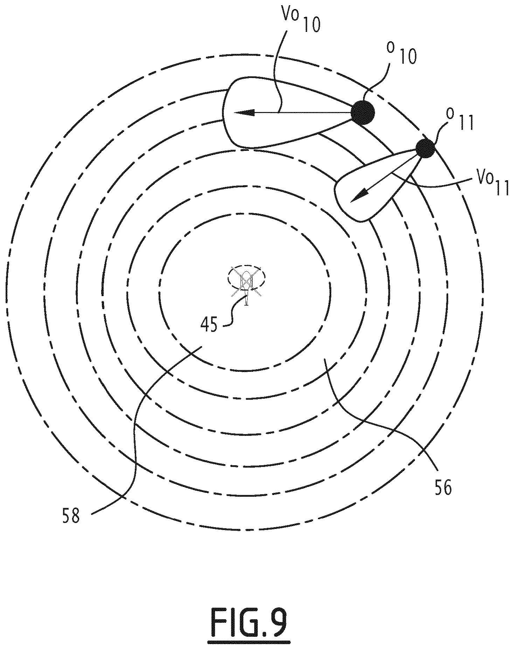

Le module de traitement de données 14 est un module électronique propre à mettre en oeuvre automatiquement (i.e. sans intervention humaine) l'ensemble de ses traitements en considérant le repère fixe de l'aéronef (les obstructions sont donc considérées en positionnement relatif par rapport à l'appareil), et le distinguo entre alerte (risque imminent) et avertissement (i.e. présence d'une obstruction n'impliquant pas de risque immédiat) se fait en fonction d'un ensemble de seuils de temps avant impact prédéfinis tels qu'illustrés par la figure 8 ou la figure 9 selon deux variantes de représentations concentriques (rectangulaire et circulaire respectivement autour de l'aéronef), où les obstructions $O_7$, $O_9$, $O_{10}$ présentent un vecteur vitesse $V_{O7}$, $V_{O9}$, $V_{O10}$ révélant que sauf changement de trajectoire de l'aéronef 45 il n'y pas de risque de collision et feront juste l'objet d'un avertissement du pilote, tandis que les obstructions $O_8$ et $O_{11}$ présentent un vecteur vitesse $V_{O8}$, $V_{O11}$ dirigé vers la localisation de l'aéronef 45 et fera l'objet d'un avertissement à destination de l'équipage tant qu'elle reste localisée dans la zone de surveillance 56 encore associée à l'émission d'avertissement, et fera l'objet d'une alerte à destination de l'équipage dès lors qu'elle se situera dans la zone de surveillance 58 la plus critique.

Le traitement d'évaluation du risque mis en oeuvre par le traitement de données 14 est réalisé en comparant le temps avant impact à des seuils de temps prédéfinis, ces seuils de temps étant en option modulables par le pilote par exemple via une interface de type potentiomètre. Un tel traitement d'évaluation du risque mis en oeuvre par le traitement de données 14 vise à informer l'équipage ou à tout le moins le pilote de la présence d'un objet à risque dans une zone de surveillance de volume prédéfini autour de l'aéronef.

Le but poursuivi par le module de traitement de données 14 pour ce traitement d'évaluation de risque est donc de considérer comme plus dangereux les obstructions (y compris le relief) tendant à se rapprocher le plus vite de l'aéronef ou vers lesquels l'aéronef tend ou pourrait être susceptible de tendre et de considérer comme moins dangereux, voir inoffensifs, les obstructions s'éloignant de l'aéronef ou dont l'aéronef s'éloigne suffisamment rapidement.

En complément, selon une variante optionnelle, le module de traitement de données 14 est propre à utiliser pour effectuer l'évaluation de risque un prolongement du vecteur vitesse de l'aéronef 45 et de l'obstruction ou bien un palpeur type TAWS pour déterminer les obstructions à risque. Par palpeur (de l'anglais *clearance sensor*), il est classiquement considéré des surfaces virtuelles calculées par le calculateur de bord et délimitant un volume d'exploration de l'espace qui est comparé la topographie du terrain correspondant telle que fournie par une base de données de terrain embarquée. Dans les deux cas de cette variante optionnelle, le principe de détection est similaire. La différence est que le palpeur consiste à définir une zone orientée selon le vecteur vitesse et couvrant les trajectoires court terme possible de l'aéronef comme de l'obstruction. La longueur de la zone est fonction de la vitesse de déplacement des aéronefs et du temps d'anticipation prédéfini. Dans le cas où la donnée de vitesse de l'aéronef n'est pas disponible, une longueur forfaitaire est considérée ou déduite des données issues des capteurs (directement, ou indirectement en mesurant le déplacement de l'aéronef entre plusieurs acquisitions de données).

Selon les données de l'aéronef disponibles (attitude (angle de roulis, angle d'inclinaison, variation de cap...), altitude, vitesse verticale, vitesse au sol...) et celles renvoyées par les capteurs, les cas de trajectoire ligne droite et virage sont distingués. Si ces informations ne sont pas disponibles, seul le cas ligne droite est considéré.

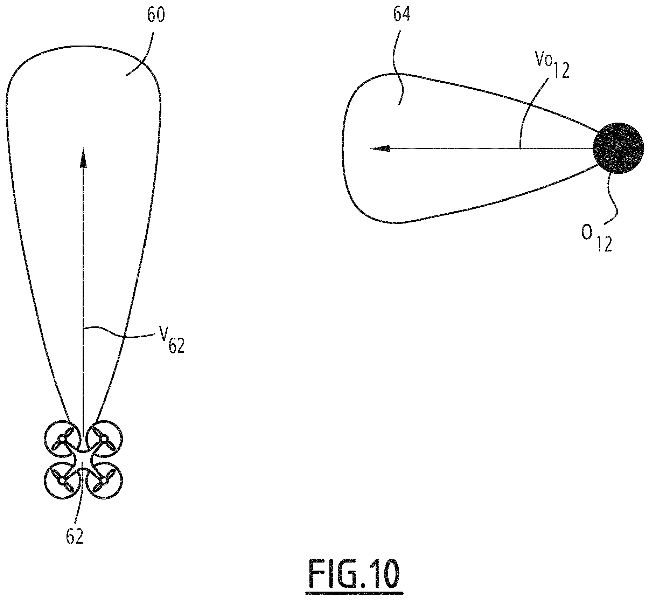

Dans le cas ligne droite, illustré par la figure 10, une zone 60 est centrée sur le vecteur vitesse $V_{62}$ de l'aéronef 62, ici un quadrirotor, et une autre zone 64 est centrée sur le vecteur vitesse $V_{O12}$ de l'obstruction $O_{12}$, les zones couvrant le déplacement possible de l'aéronef 60 comme de l'obstruction $O_{12}$ ayant une ouverture configurable de quelques degrés, 3° par exemple.

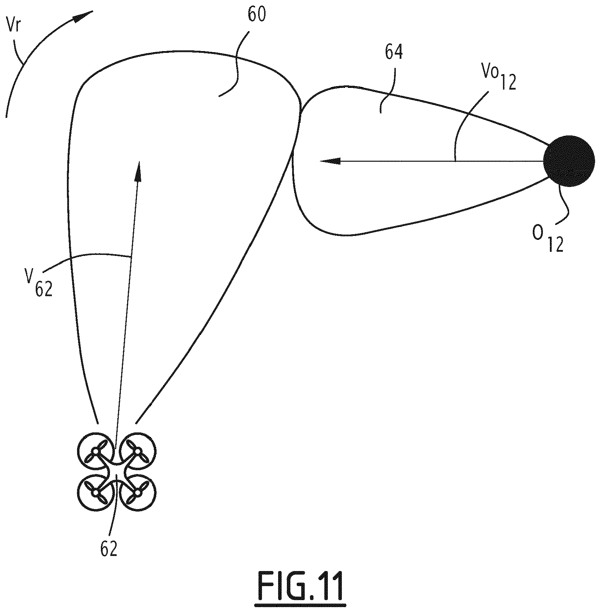

Dans le cas de virage $V_r$, illustré par la figure 11, la zone 60 centrée sur le vecteur vitesse $V_{62}$ de l'aéronef 62 est étendue dans le sens du virage $V_r$. L'angle alpha du côté du virage est pris dans ce cas égal à :

$$\beta = (T*g*Tan(A_{roulis}))/(2*V)$$ dans le cas d'un aéronef à voilure fixe par exemple. Avec T, le temps d'anticipation considéré (compris entre 0 et 20 secondes par exemples), g, l'accélération de la pesanteur, $A_{roulis}$ l'angle de roulis courant de l'aéronef, V, la vitesse sol courante de l'aéronef, et

$$\beta = T * (variation\ cap\ réel + variation\ cap)/2$$ dans le cas d'un aéronef à voilure tournante 45 ou 62, où par « cap réel » on entend le cap prenant en compte le vent, tandis que par « cap » on entend l'orientation du nez de l'aéronef propre à être décalée par rapport au cap réel an cas de vent de travers par exemple (i.e. vol en crabe de l'aéronef). Il est à noter qu'en fonction du capteur utilisé le cap réel n'est parfois pas une donnée accessible, sa variation est alors considérée nulle par défaut.

L'évaluation du risque de collision en virage $V_r$ est réalisée en comparant à des seuils prédéfinis illustrés par les figures 8 et 9 le temps avant impact déterminé en utilisant l'extrémité du vecteur vitesse/palpeur de l'aéronef comme de l'obstruction.

A chaque obstruction, le module de traitement de données 14 est ainsi propre à associer un niveau de risque découlant directement du seuil le plus proche coupé par l'un des trois éléments suivants en fonction de la variante de réalisation sélectionnée : le vecteur représentant la variation de distance entre l'obstruction et l'aéronef, ou le vecteur vitesse de l'obstruction, ou le palpeur de l'obstruction.

A partir du traitement d'évaluation de risque, le module de traitement de données 14 est propre à mettre en oeuvre un traitement d'alerte pour prévenir l'équipage ou à tout le moins le pilote d'un risque de collision dès qu'il est détecté qu'une obstruction a franchi un seuil d'alerte parmi les seuils de temps prédéfinis décrit en relation avec le traitement d'évaluation du risque. Un tel seuil d'alerte correspond par exemple à la frontière entre les zones de surveillance 56 et 58 définies autour de l'aéronef 45 sur les figures 8 et 9.

Selon la variante optionnelle indiquée précédemment pour le traitement d'évaluation de risque préalable, et consistant à appliquer le prolongement du vecteur vitesse de l'aéronef 45 et de l'obstruction ou bien un palpeur type TAWS, une alerte est générée dès que le vecteur vitesse/palpeur de l'aéronef coupe le vecteur vitesse d'une obstruction, l'obstruction en question étant alors considérée comme présentant un risque de collision avéré. Selon ce traitement d'alerte, La position de l'obstruction et des extrémités de l'aéronef sont comprises dans le calcul propre à être mis en oeuvre automatiquement par le module de traitement 14.

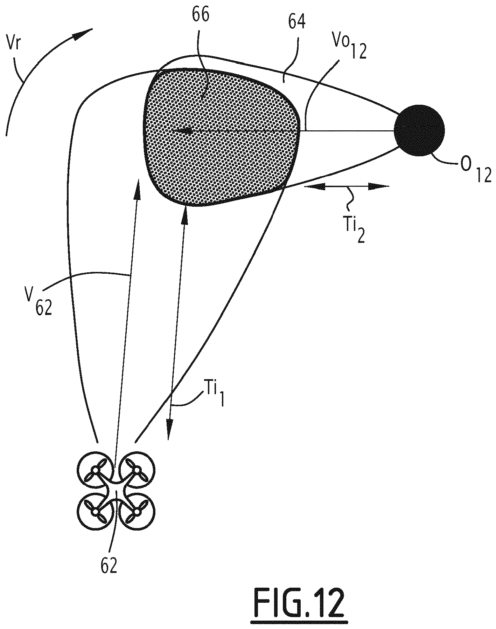

Lorsqu'il y a chevauchement 66 de la zone 60 centrée sur le vecteur vitesse $V_{62}$ de l'aéronef 62 et de la zone 64 est centrée sur le vecteur vitesse $V_{O12}$ de l'obstruction $O_{12}$ tel qu'illustré par la figure 12, une alerte de risque de collision est générée et l'identifiant de l'obstruction $O_{12}$ est mémorisé.

Un tel traitement d'alerte mis en oeuvre par le module de traitement 14 est basé sur l'hypothèse selon laquelle que compte tenu des champs de vision verticaux et de la portée des différents capteurs, passer au-dessus d'une obstruction détectée, qui plus est si celle-ci est mobile, ne correspond pas à une opération normale de l'aéronef. L'équipage (à bord ou distant dans le cas d'un drone) doit donc être prévenu afin d'analyser la situation.

Le niveau de sévérité d'alerte $N_a$ prend en compte des seuils d'alerte prédéfinis (configurables et éventuellement modulable par l'équipage) dépendants du temps total restant $T_{tot\_i} = T_{i1} + T_{i2}$ avant impact, avec $T_{i1}$ et $T_{i2}$ tel qu'illustrés sur la figure 12 correspondant respectivement au temps séparant la zone de chevauchement 66 des palpeurs du porteur et de l'obstruction et de la vitesse relative de l'obstruction $O_{12}$, et $N_a = V_{relative\_obstruction}/T_{tot\_i}$.

Suivant la distance maximale de détection offerte par les capteurs et le niveau de complexité du dispositif anticollision 10 sélectionnée par l'utilisateur (et/ou constructeur), entre un et trois seuils d'alertes sont propres à être définis selon un degré de sévérité décroissant à savoir un premier seuil d'alerte maximal requérant un évitement (de l'anglais *avoid*) si, par exemple, $N_a > 4,1 m.s^{-2}$, un deuxième seuil d'alerte correspondant à un avertissement (de l'anglais *warning*) si par exemple, $2,5 m.s^{-2} \leq N_a \leq 4,1 m.s^{-2}$, et un troisième seuil d'alerte $N_a < 2,5 m.s^{-2}$ correspondant à une simple mise en garde (de l'anglais *caution*).

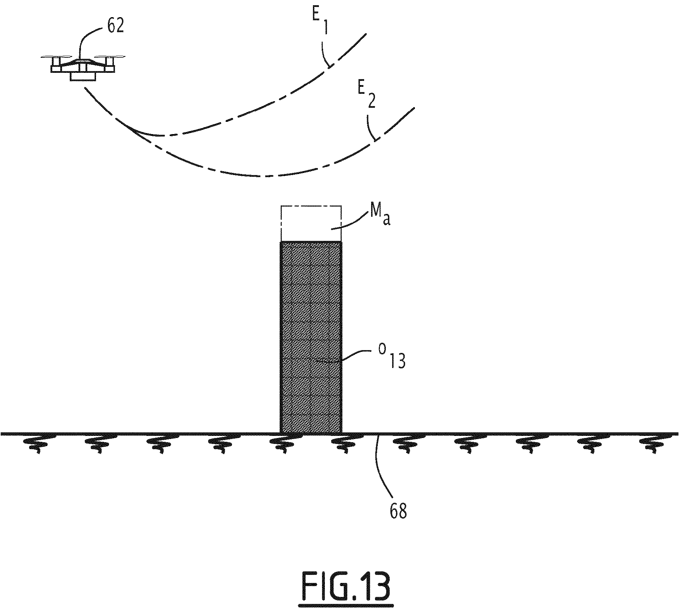

Selon un aspect optionnel illustré par la figure 13, le module de traitement 14 est apte à mettre en oeuvre un calcul propre à considérer une dimension verticale en utilisant un profil vertical de l'obstruction $0_{13}$ associée, en fonction du niveau d'alerte précédemment déterminé, à une manoeuvre d'évitement immédiat $E_1$, ou à une manoeuvre évasive $E_2$. Un tel profil tient compte des performances réelles courantes de l'aéronef 62. Pour se faire, il est nécessaire que les capteurs embarqués fournissent l'élévation de l'obstruction et que l'obstruction soit fixée au sol 68 (un tel calcul n'ayant pas de sens pour une obstruction mobile).

Selon un aspect particulier, lorsque le module de traitement 14 est apte à déterminer que la manoeuvre évasive $E_2$ est propre à passer au-delà de l'obstruction $0_{13}$ dont la hauteur est augmentée d'une marge $M_a$, alors, le niveau de l'obstruction $0_{13}$ en alerte est automatiquement déclassé. Au contraire, lorsque le module de traitement 14 est apte à déterminer que la manoeuvre évasive $E_2$ entre en conflit avec l'obstruction $0_{13}$ dont la hauteur est augmentée d'une marge $M_a$ alors le niveau d'alerte associé est maintenu. De plus, lorsque le module de traitement 14 est apte à déterminer que la manoeuvre d'évitement immédiat $E_1$ entre en conflit avec la hauteur d'obstruction augmentée d'une marge $M_a$, l'alerte correspondant au seuil d'alerte maximal requérant un évitement (de l'anglais *avoid*) est émis.

L'information délivrée par le traitement d'alerte est plus prioritaire que celle relative au traitement d'évaluation du niveau de risque, ces deux informations sont donc considérées exclusives l'une de l'autre.

En complément optionnel, le module de traitement de données 14 est propre à mettre en oeuvre un traitement de fourniture d'une information représentative d'une dérive de l'aéronef, dépendant du type de technologie de capteur utilisée.

Un tel traitement de fourniture d'une information représentative d'une dérive de l'aéronef est notamment utile pour des missions durant lesquelles l'aéronef subit un soulèvement de la poussière/la neige (de l'anglais *brownout/whiteout*) présente sur une zone d'atterrissage/décollage par maintien d'un aéronef, notamment à voilure tournante, en vol stationnaire, où en cas de vent, l'aéronef est propre à se déplacer sans que le pilote ait la possibilité de le détecter puisqu'il est susceptible de perdre ses repères visuels du fait de la poussière/neige soulevée.

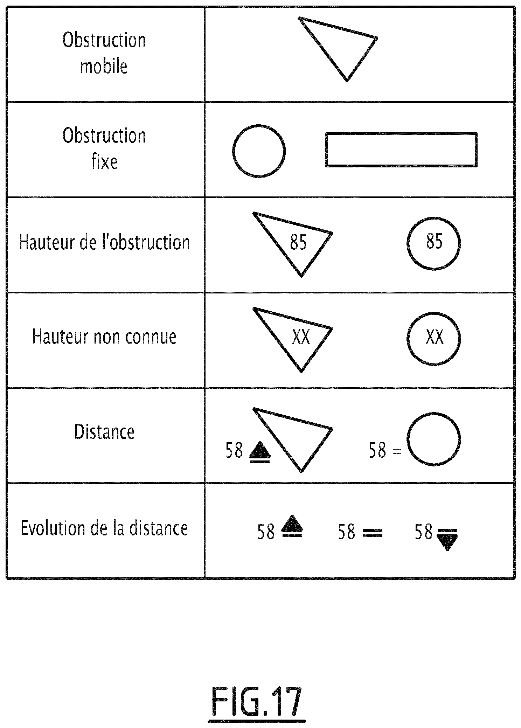

Selon une première variante, un tel traitement de fourniture d'une information représentative d'une dérive de l'aéronef consiste à déterminer en temps réel un déplacement relatif de l'aéronef vis-à-vis de son environnement en utilisant l'interface homme-machine 30 connectée au dispositif anticollision 10. Via la symbologie présentée figure 17 par exemple, le dispositif anticollision est propre à présenter l'évolution de la situation au pilote de l'aéronef. Il est ainsi possible de présenter la variation de distance entre l'aéronef et les obstructions et d'indiquer (par comparaison de la position de l'aéronef avec les obstructions fixes identifiées par les différents capteurs) un vecteur vitesse sol à l'équipage.

Selon une deuxième variante, lorsque l'aéronef est en mode stationnaire (information fournie par un dispositif avionique tiers de l'aéronef ou par le pilote lui-même via l'IHM30), caractérisé par une hauteur non nulle vis-à-vis du sol et une vitesse sol sensiblement nulle, le module de traitement de données 14 est propre à comparer l'évolution de la scène environnante au niveau du sol et notamment la position de l'aéronef vis-à-vis des obstructions identifiées comme fixes. Si la position évolue de plus d'une certaine distance (configurable et correspondant par exemple à un rayon de rotor), d'une information représentative d'une dérive de l'aéronef est remontée automatiquement à l'équipage.

Le module de traitement de données 14 fournit donc comme sortie une synthèse de l'environnement en terme d'obstructions identifiées et suivies dans le temps avec leurs caractéristiques, à savoir un identifiant de l'obstruction, une position de l'obstruction, le capteur(s) ayant détecté(s) l'obstruction, la taille de l'obstruction, la probabilité d'existence de l'obstruction, l'élévation de l'obstruction, suivant le type de capteur, l'évaluation du risque, le niveau d'alerte, et à titre optionnel une information représentative d'une dérive de l'aéronef.

Le module de supervision 20 est configuré pour adapter le comportement des capteurs et du dispositif anticollision 10 en fonction de la situation de l'aéronef.

En d'autres termes, le module de supervision 20 a pour tâche de gérer, les différents capteurs $S_1$, $S_2$, ..., $S_i$, ...$S_N$, par inhibition/réduction de la puissance d'émission, en fonction des paramètres de configuration $D_1$, des modes opérationnels 24, de la phase de vol courante $D_2$ et de la technologie des différents capteurs, elle inhibera/réduira la puissance d'émission des capteurs concernés.

Une telle gestion mise en oeuvre par le module de supervision 20 permet :

- d'éviter des nuisances rencontrées lors de phases de vol particulières, telle que par exemple une phase de treuillage (où il est utile d'inhiber les capteurs regardant vers l'avant de l'aéronef ou d'en réduire la puissance d'émission jusqu'à l'arrêt car de tels capteurs risquent de produire de fausses alertes), ou rencontrées lorsque des modes de fonctionnement particuliers tels que, par exemple, le mode « poser patin », le mode « vol tactique » sont activés ;
- de protéger les personnes opérant à proximité de l'aéronef en modulant le niveau de puissance émis par chaque capteur: les technologies actives telles que celles à base de laser ou de radar étant susceptibles d'engendrer des lésions graves à plus ou moins brèves échéances (cécité dans le cas du laser, cancer dans le cas des ondes radars notamment), en respectant les limites maximales d'exposition requises par les règlementations en vigueur ;
- limiter l'exposition de l'aéronef aux détections extérieures notamment pour un mode en « vol tactique », où les capteurs actifs sont propres à favoriser le repérage/la localisation de l'aéronef, par réduction du niveau d'émission de certains capteurs ou activation d'un mode fonctionnement pulsé (actifs pendant un laps de temps limité puis inactifs, puis actifs à nouveau, etc...) ;
- empêcher le dispositif anticollision 10 de perturber le fonctionnement d'équipements électroniques distincts de l'aéronef tel que par exemple des observatoires astronomiques, dont la plage de fréquence est identique à celle de capteurs correspondant à des radars millimétrique en coupant les émissions de ces capteurs dans les zones d'installation de ces capteurs.

Une telle gestion mise en oeuvre par le module de supervision est effectuée à partir des données de configuration $D_1$ contenant notamment, pour chaque capteur, un identifiant du capteur, la technologie du capteur, la position du capteur sur l'aéronef, le champ de vision, le niveau de puissance émis par mode fonctionnel 24, le niveau de puissance émis par phase de vol $D_2$, les modes fonctionnels 24 pour lesquels le capteur est inhibé/coupé, la phases de vol $D_2$ pour lesquelles le capteur est inhibé/coupé, une base de données 32 locale (propre à la mission) ou de superficie plus étendue (mondiale par exemple) contenant les zones pour lesquelles l'utilisation de telle ou telle technologie de capteur est exclue.

Le module de supervision 20 est propre à exploiter cette base de données ainsi que les phases de vol et autres paramètres de vol $D_2$ de la machine (position par ex) et propre à envoyer les commandes nécessaires au(x) capteur(s) concerné(s) via l'interface physique de liaison au(x) capteur(s) pour réduire leur puissance ou bien les arrêter complètement.

Selon un aspect particulier, le module de supervision 20 est également propre à moduler les sorties du module d'affichage 34 et/ou du module de restitution sonore 36 en fonction du mode fonctionnel 24 activé et/ou de la phase de vol $D_2$. Par exemple, en mode affichage exclusif (de l'anglais *display*), seul les sorties du module d'affichage 34 sont activées, les sorties du module de restitution sonore 36 sont inhibées.

Le module d'affichage 34 est en charge de la représentation graphique de la situation en temps réel de l'aéronef et de la marge de manoeuvre dont il peut disposer, accompagnée, le cas échéant, par la production d'alertes visuelles, et sonores par le module de restitution sonore 36.

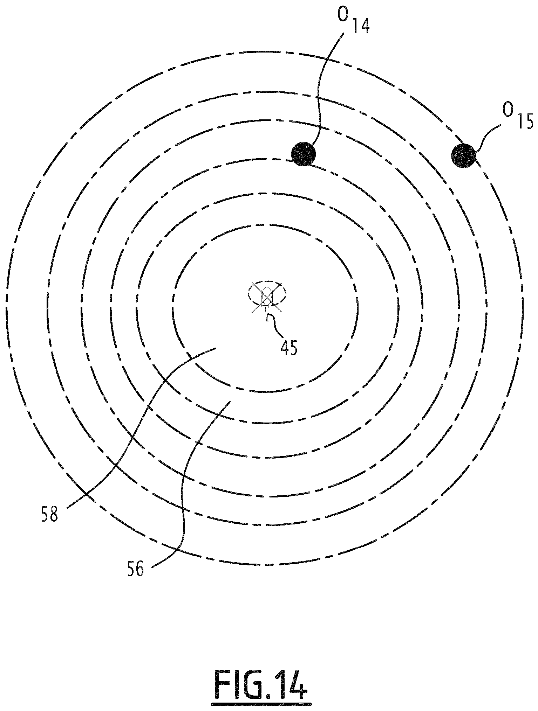

Une telle représentation graphique peut prendre plusieurs formes illustrées par les figures 14 à 17.

La figure 14 est un exemple de représentation graphique incluant la localisation des différentes obstructions $O_{14}$ et $O_{15}$ situées dans le champ de vision des différents capteurs $S_1$, $S_2$, ..., $S_i$, ...$S_N$. Selon un aspect particulier, des couleurs différentes sont utilisées pour mettre en valeur les obstructions les plus à risques (obstruction s'approchant ou s'éloignant, obstruction situés à la même hauteur ou en dessous de l'aéronef).

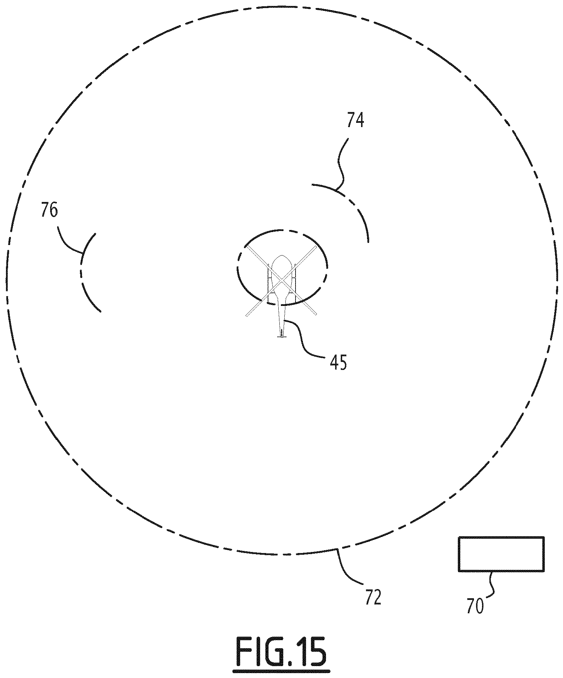

La figure 15 est un exemple de représentation graphique fournissant dans la zone de surveillance 72 capteurs $S_1$, $S_2$, ..., $S_i$, ...$S_N$ une information 74, 76 de direction par obstruction et une information 70 de distance.

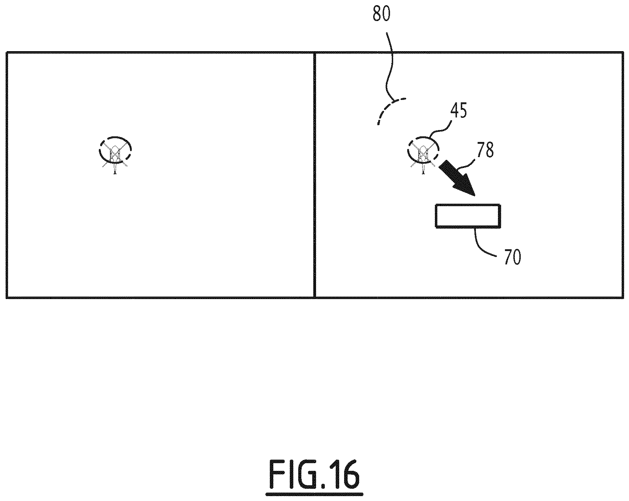

La figure 16 est un exemple de représentation graphique épuré pour un système tête haute par exemple, où seule la direction 78 de l'obstruction la plus proche ainsi que la distance 70 la séparant de l'aéronef 45. Selon un aspect optionnel, la direction 80 dans laquelle se trouve une seconde obstruction la plus proche est ajoutée.

Selon un aspect additionnel non représenté, la fourniture du positionnement de différents seuils de risques et de la distance entre l'aéronef (bout des pales par exemple dans le cas d'un hélicoptère) et l'obstruction la plus proche sont également représentés. En cas de risque de collision important, la couleur de l'information de distance ou bien celle de l'obstruction sont propre à être adaptées (rouge au lieu d'ambre par exemple, pour signaler l'urgence). Les zones où le dispositif anticollision est « aveugle » (i.e. zone blanche) sont également représentables sous la forme de secteurs hachurés par exemple.

A titre d'exemple non limitatif, le tableau en figure 17 propose un exemple de symboles permettant de dissocier les obstacles fixes des obstacles mobiles, de présenter la direction de déplacement des obstacles mobiles et l'évolution de l'inter distance entre les obstructions et l'aéronef.

Le module de restitution sonore 36 est quant à lui propre à restituer sous forme de signal audio une alerte de risque de collision en utilisant par exemple une voix de synthèse annonçant le franchissement de chaque seuil et la direction de l'obstruction la plus proche, ou un signal audio dont la fréquence et/ou l'intensité reflète la proximité et la direction de l'obstruction. Pour ce faire, le module de restitution sonore 36 intègre directement un élément de restitution audio ou est en liaison avec un élément déporté de type oreillette par exemple.

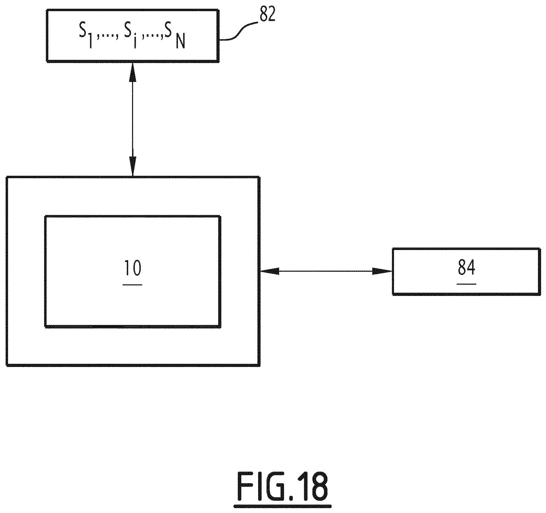

Les figures 18 à 21 illustrent différents exemples d'architecture du système avionique de protection selon l'invention.

La figure 18 représente une première architecture « basique » dans lequel le dispositif anticollision 10, 38 selon la présente invention est autonome (de l'anglais *stand-alone*). Selon cette première architecture basique, la pluralité 82 de capteurs $S_1$, $S_2$, ..., $S_i$, ...$S_N$ sont installés sur l'aéronef et son propres à fournir les données captées au dispositif anticollision 10,38 qui délivre directement en sortie à l'équipage 84 sous forme visuelle et/ou audio, une information représentative de la présence ou de l'absence d'obstruction. Selon cette architecture basique, le dispositif anticollision 10, 38 n'est pas couplé à d'autres sources de données, tel qu'un dispositif de surveillance (e.g un dispositif d'avertissement et d'évitement du relief TAWS) et, par exemple, n'est pas propre à anticiper les changements d'attitude de l'aéronef. Selon cette architecture basique, le dispositif anticollision 10, 38 correspond par exemple à un sac de vol électronique (EFB de l'anglais *electronic flight bag*), un casque tête haute (HUD de l'anglais *head up display*) ou encore un calculateur dédié.

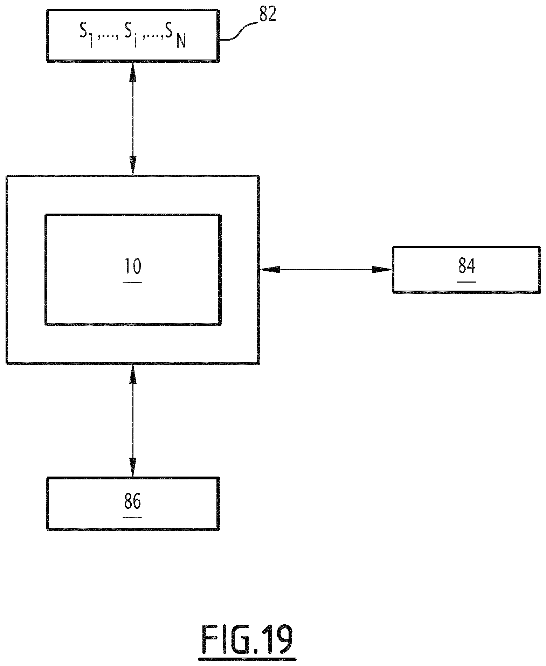

La figure 19 représente une deuxième architecture « augmentée » dans laquelle_le dispositif anticollision 10 38 est, en comparaison avec l'architecture basique décrite précédemment en relation avec la figure 18, couplé (i.e. propre à coopérer, recevoir et/ou échanger des données avec) à un ensemble 36 d'autres instruments avioniques, tel qu'un instrument de géolocalisation, (e.g. un système GPS de géolocalisation par satellite), un calculateur de données aérodynamique ou ordinateur anémométrique (ADC de l'anglais *Air data computer*), une centrale inertielle (AHRS de l'anglais *Attitude and Heading référence System*) un radioaltimètre, etc., dans le but d'accroître la pertinence des informations générées par le dispositif anticollision 10, 38 à l'ensemble de l'équipage 84. Un tel système avionique de protection conforme à l'architecture augmentée de la figure 19, en sus des capacités du système avionique de protection conforme à l'architecture basique de la figure 18, est donc également propre à récupérer les données de vol de l'aéronef à savoir vitesse, position, altitude... pour optimiser la pertinence de l'information, générée selon l'invention, et représentative de la présence ou de l'absence d'une obstruction.

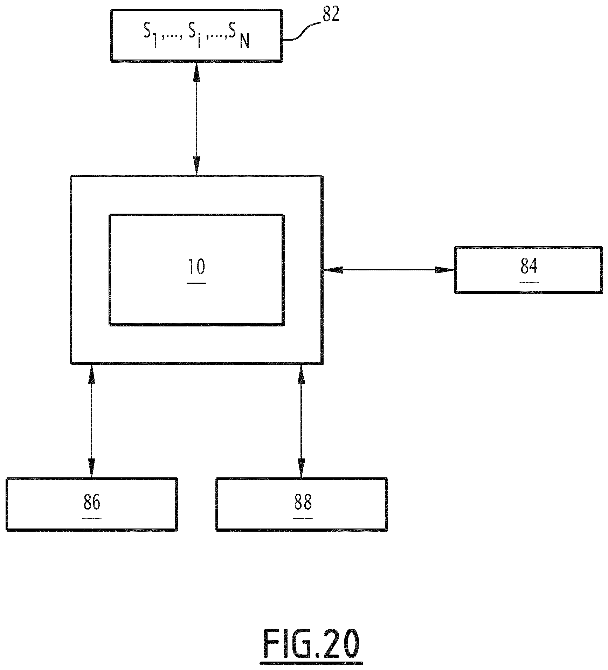

Selon un troisième exemple d'architecture « couplée » illustré par la figure 20, l'architecture augmentée de la figure 19 est enrichie par le couplage à un système 88 de surveillance intégré à l'aéronef (ISS de l'anglais *Integrated Surveillance System*) comprenant notamment un dispositif avionique d'avertissement et d'évitement du relief (TAWS ou HTAWS de l'anglais *Terrain Awareness & Warning System ou Helicopter Awareness & Warning System*) ce qui permet en sus au dispositif anticollision 10, 38 de récupérer des informations fournies directement par le système de surveillance comme les phases de vol, les modes opérationnels, etc. Selon cette architecture « couplée », l'interface homme machine 30 est commune aux deux dispositifs à savoir le dispositif anticollision 10, 38 selon l'invention et le dispositif TAWS.

Selon cette troisième architecture, le dispositif d'avertissement et d'évitement du relief et le dispositif anticollision sont donc propres à interagir (i.e. à s'écouter l'un et l'autre).

Le couplage mis en oeuvre dans cette troisième architecture « vaut » coordination de sorte à augmenter le plus possible les cas de protection de l'aéronef, le dispositif d'avertissement et d'évitement du relief et le dispositif anticollision étant propres, par exemple, à fonctionner indépendamment l'un de l'autre en utilisant au moins une donnée d'entrée de même type comme une donnée d'activation/désactivation. Par exemple, à partir de la donnée « phase de vol », le dispositif d'avertissement et d'évitement du relief est activé en phase de croisière et désactivé au décollage/atterrissage, phases de vol durant lesquelles le dispositif anticollision selon l'invention est activé.

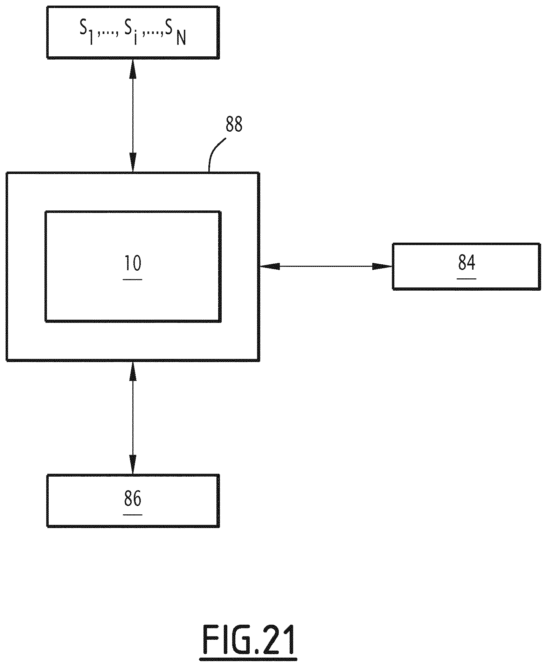

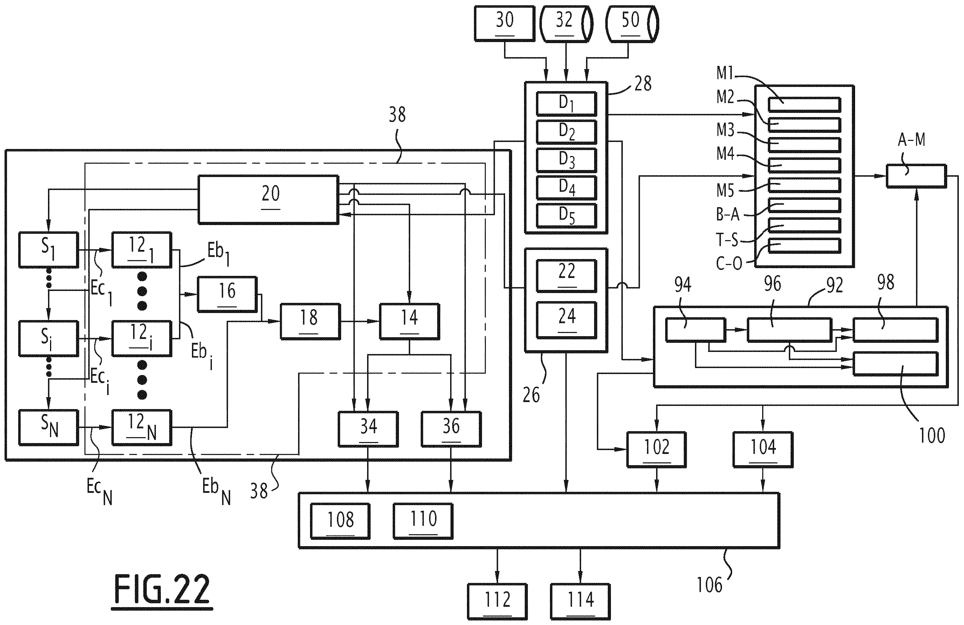

La figure 21 représente une quatrième architecture où le dispositif anticollision 10, 38 selon l'invention est intégré directement dans un système 88 de surveillance intégré à l'aéronef comprenant notamment un dispositif avionique d'avertissement et d'évitement du relief. La structure d'une telle intégration est schématisée sur la figure 22, et correspond à l'ensemble des éléments du dispositif anticollision de la figure 1 fusionné avec l'ensemble des éléments classiquement associés à un dispositif TAWS.

Par fusionné, on entend que des éléments tels que le module 26 de gestion de mode de pilotage, le module 28 de gestion des paramètres d'entrées, l'interface 30 de saisie de commande(s) de pilotage et la base de données 32 sont communs au dispositif anticollision et au dispositif TAWS.

Le module 28 de gestion des paramètres d'entrées est par exemple enrichi d'une cinquième catégorie $D_5$ de données plus spécifique au dispositif TAWS à savoir des modèles numériques de terrain et d'obstructions préalablement mémorisés.

Une telle cinquième catégorie $D_5$ est couplée à une base de données spécifique 90 à de tels modèles numériques de terrain et d'obstruction.

Pour le dispositif TAWS, le module 28 de gestion des paramètres d'entrées alimente classiquement un module de gestion de modes réactifs parmi par exemple des modes réactifs prédéfinis $M_1$, $M_2$, $M_3$, $M_4$, $M_5$, « angle d'inclinaison » B-A, « risque de contact queue-sol » T-S (de l'anglais *Tail Strike*), un mode « rappel d'altitude » C-O (de l'anglais *Callout*). Le module de gestion de modes réactifs 28 est propre à délivrer, à un module de gestion d'alerte A-M, un mode réactif sélectionné en fonction des paramètres d'entrée et de la sortie délivrée par le module 26 de gestion de mode de pilotage. Le module de gestion d'alerte A-M est également alimenté par un module 92 de prédiction de mode comprenant au moins un capteur 94, un élément 96 de prédiction de collision avec le terrain, un élément 98 de prédiction de collision avec un obstacle distinct du terrain, un élément 100 de prédiction linéaire de collision avec un obstacle distinct du terrain. Les sorties du module de gestion d'alerte A-M et du module 92 de prédiction de mode sont propres à être restituées par un module d'affichage 102 et/ou par un module de restitution sonore 104.

L'ensemble formé par le dispositif anticollision et par le dispositif TAWS ou HTAWS est contrôlé par un dispositif 106 de supervision configuré pour commander l'activation/désactivation des modules spécifiques au dispositif d'avertissement et d'évitement du relief et l'activation/désactivation des modules spécifiques au dispositif anticollision au moyen d'une donnée d'entrée de même type, par exemple une phase de vol, une commande pilote, une commande de système externe type « commande de système de gestion de vol (FMS de l'anglais *Flight Management System*), etc.

Pour ce faire, le dispositif 106 de supervision comprend notamment un module 108 de surveillance globale de la situation de l'aéronef et un superviseur d'alerte 110 propre à arbitrer/sélectionner les informations visuelles et orales issues du dispositif anticollision selon l'invention et/ ou issue du dispositif TAWS ou HTAWS afin de choisir l'information la plus pertinente à présenter selon la phase de vol/le mode fonctionnel enclenché à l'équipage au moyen d'un module d'affichage 112 et/ou d'un module de restitution sonore 114.

Le dispositif 106 de supervision est également propre à gérer un éventuel recouvrement en termes de protection ainsi que les priorités entre les différentes informations à remonter à l'équipage.

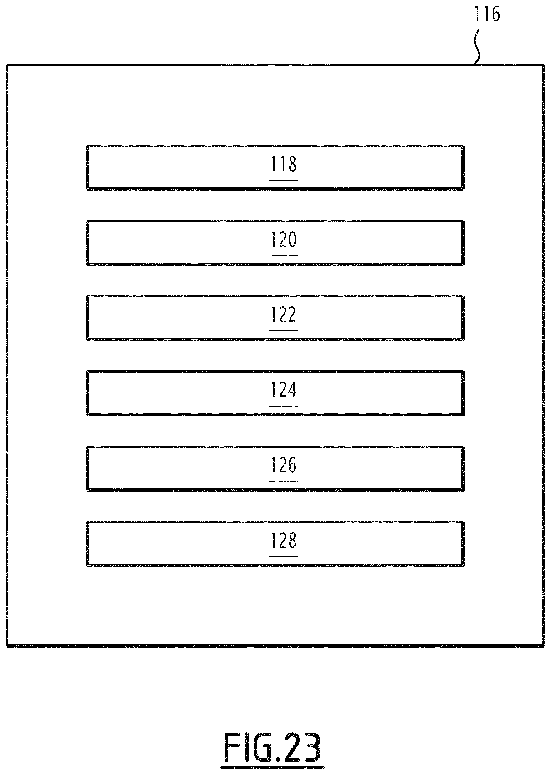

En relation avec la figure 23, le procédé 116 d'anticollision selon l'invention mis en oeuvre par le dispositif anticollision 10, 38 comprend une première étape 118 optionnelle de supervision pour commander (i.e. activer/désactiver, moduler la puissance d'émission, etc.) les N capteurs $S_1$, $S_2$, ..., $S_i$, ...$S_N$ en fonction d'au moins un paramètre d'entrée des catégories $D_1$ à $D_4$ précédemment décrites, chaque capteur $S_1$, $S_2$, ..., $S_i$, ...$S_N$ étant propre à délivrer respectivement son propre ensemble de données captées $S_1$, $S_2$, ..., $S_i$, ...$S_N$ en fonction de la proximité d'au moins une obstruction.

Selon une étape 120, le dispositif anticollision 10 met en oeuvre une uniformisation des données captées spécifiquement par chaque capteur pour délivrer respectivement un ensemble de données banalisées (i.e. génériques) formé d'une pluralité de types de données identiques d'un ensemble de données banalisées à l'autre.

Selon une étape optionnelle 122, le dispositif anticollision 10, 38 met en oeuvre une complétion permettant de compléter, à partir d'un ensemble de données banalisées $Eb_i$ associé à un des capteurs $S_i$, au moins une valeur manquante associée à un type, de la pluralité de types de données identiques d'un ensemble de données banalisées $Eb_j$ d'un autre capteur $S_j$ de la pluralité de capteurs $S_1$, $S_2$, ..., $S_i$, ...$S_N$ de l'aéronef.

Selon une autre étape 124, le dispositif anticollision 10, 38 met er oeuvre un prétraitement permettant de fusionner les données de tous les ensembles de données banalisées $Eb_1$, $Eb_2$, ..., $Eb_i$, ...$Eb_N$ en fonction d'une zone de détection associée à chaque capteur $S_1$, $S_2$, ..., $S_i$, ...$S_N$ et à les transmettre au module 14 de traitement de données, et le cas échéant au cours de laquelle, est ou sont appliqués : un filtrage temporel à chaque ensemble de données banalisées $Eb_1$, $Eb_2$, ..., $Eb_i$, ...$Eb_N$ de sorte à éliminer les données associées à une obstruction dont la durée de présence à proximité de l'aéronef est inférieure à un seuil prédéterminé, et/ou une comparaison de la fusion des données de tous les ensembles de données banalisées $Eb_1$, $Eb_2$, ..., $Eb_i$, ...$Eb_N$ à un historique de données fusionnées préalablement mémorisé.

Selon une étape 126, le dispositif anticollision 10, 38 met en oeuvre un traitement des données génériques, correspondant directement, ou obtenues à partir des données banalisées pour générer au moins une information représentative de la présence ou absence d'obstruction(s).

Selon une étape 128, le dispositif anticollision 10, 38 met en oeuvre une étape de restitution à l'équipage ou au moins au pilote de l'information représentative de la présence ou absence d'obstruction(s).

Ainsi, le dispositif anticollision et le procédé d'anticollision selon l'invention, couplé ou non à un dispositif TAWS ou HTAWS, permettent d'améliorer la sécurité de l'aéronef en couvrant des situations où l'aéronef opère, par exemple, à basse vitesse avec des marges de séparations latérale et verticale faibles par rapport à des obstacles artificiels fixes ou mobiles situés à proximité (phases de décollage, d'atterrissage, de vol stationnaire et de taxi) mais également les phases dites de vol en basse altitude où l'appareil opère proche du sol, et ce tout en s'affranchissant de l'origine et de la technologie des capteurs utilisés dont on tire profit via la banalisation de l'interface entre les capteurs et le coeur 14 fonctionnel du dispositif anticollision 10, 38 selon l'invention.

## Revendications

1. Dispositif anticollision (10, 38) d'un aéronef comprenant une pluralité de capteurs ($S_1$, $S_2$, ..., $S_i$, ...$S_N$), la pluralité de capteurs ($S_1$, $S_2$, ..., $S_i$, ...$S_N$) comprenant au moins deux capteurs ($S_i$, $S_j$) distincts, chaque capteur ($S_1$, $S_2$, ..., $S_i$, ...$S_N$) étant propre à délivrer respectivement son propre ensemble de données captées ($S_1$, $S_2$, ..., $S_i$, ...$S_N$) en fonction de la proximité d'au moins une obstruction,
   ledit dispositif anticollision (10, 38) comprenant :

   - au moins un module d'uniformisation (12) de données propre à transformer au moins un ensemble de données captées ($Ec_i$) en un ensemble de données banalisées ($Eb_i$) correspondant, chaque ensemble de données banalisées ($Eb_i$) associé respectivement à au moins un capteur ($C_i$) étant formé d'une pluralité de types de données identiques d'un ensemble de données banalisées à l'autre,
   - un module de traitement (14) de données propre à générer, à partir desdits ensembles de données banalisées ($Eb_1$, $Eb_2$, ..., $Eb_i$, ...$Eb_N$), au moins une information représentative de la présence ou de l'absence d'obstruction(s), et
   - un module de prétraitement (18) de données au moins propre à fusionner les données de tous les ensembles de données banalisées ($Eb_1$, $Eb_2$, ..., $Eb_i$, ...$Eb_N$) en fonction d'une zone de détection associée à chaque capteur ($S_1$, $S_2$, ..., $S_i$, ...$S_N$) et à les transmettre au module de traitement de données.

2. Dispositif (10, 38) selon la revendication 1, dans lequel le dispositif anticollision (10, 38) comprend en outre un module de supervision (20) propre à commander la pluralité de capteurs ($S_1$, $S_2$, ..., $S_i$, ...$S_N$) en fonction d'au moins un paramètre d'entrée appartenant au groupe comprenant au moins :

   - un paramètre ($D_1$) de configuration de capteur ;
   - un paramètre ($D_2$) de vol de l'aéronef ;
   - un paramètre ($D_3$) représentatif d'au moins une mission de l'aéronef ;
   - un paramètre ($D_4$) représentatif d'une commande de pilotage saisie par le pilote ;
   - une information (22) représentative de la phase de vol courante de l'aéronef ;
   - un paramètre (24) représentatif du mode opérationnel de pilotage.

3. Dispositif (10, 38) selon la revendication 1 ou 2, dans lequel la pluralité de types de données identiques comprend au moins les trois types de données suivants, en présence d'une obstruction détectée :

   - au moins une donnée représentative d'une position d'obstruction ;
   - au moins une donnée représentative de la probabilité de détection d'obstruction ;
   - au moins une donnée représentative de la taille d'obstruction.

4. Dispositif (10, 38) selon l'une quelconque des revendications précédentes, comprenant en outre un module de complétion (16) propre à compléter, à partir d'un ensemble de données banalisées ($Eb_i$) associé à un des capteurs ($S_i$), au moins une valeur manquante associée à un type, de la pluralité de types de données identiques d'un ensemble de données banalisées ($Eb_j$) d'un autre capteur ($S_j$) de la pluralité de capteurs ($S_1$, $S_2$, ..., $S_i$, ...$S_N$) de l'aéronef.

5. Dispositif (10, 38) selon l'une quelconque des revendications précédentes, dans lequel le module de prétraitement (18) est en outre configuré pour appliquer un filtrage temporel à chaque ensemble de données banalisées ($Eb_1$, $Eb_2$, ..., $Eb_i$, ...$Eb_N$) éliminant les données associées à une obstruction dont la durée de présence à proximité de l'aéronef est inférieure à un seuil prédéterminé.

6. Dispositif (10, 38) selon l'une quelconque des revendications précédentes, dans lequel le module de prétraitement (18) est en outre configuré pour comparer la fusion des données de tous les ensembles de données banalisées ($Eb_1$, $Eb_2$, ..., $Eb_i$, ...$Eb_N$) à un historique de données fusionnées préalablement mémorisé.

7. Dispositif (10, 38) selon l'une quelconque des revendications précédentes, dans lequel lorsqu'au moins

un des capteurs ($S_1$, $S_2$, ..., $S_i$, ...$S_N$) de l'aéronef est propre à déterminer la vitesse relative d'une obstruction, le module de traitement (14) de données est également propre à générer une information représentative de la présence ou de l'absence de dérive de l'aéronef en vol stationnaire.

8. Système avionique de protection d'un aéronef comprenant un dispositif d'avertissement et d'évitement du relief et un dispositif anticollision (10, 38) selon l'une quelconque des revendications précédentes, le dispositif d'avertissement et d'évitement du relief et le dispositif anticollision (10, 38) étant chacun configurés pour s'activer/se désactiver selon un degré d'activation/désactivation prédéterminé à partir d'au moins une donnée d'entrée de même type.

9. Procédé (116) d'anticollision d'un aéronef comprenant une pluralité de capteurs ($S_1$, $S_2$, ..., $S_i$, ...$S_N$), la pluralité de capteurs ($S_1$, $S_2$, ..., $S_i$, ...$S_N$) comprenant au moins deux capteurs ($S_i$, $S_j$) distincts, chaque capteur ($S_1$, $S_2$, ..., $S_i$, ...$S_N$) étant propre à délivrer respectivement son propre ensemble de données captées ($Ec_1$, $Ec_2$, ..., $Ec_i$, ...$Ec_N$) en fonction de la proximité d'au moins une obstruction, le procédé étant mis en oeuvre par un dispositif anticollision (10, 38) et comprenant au moins :

     - une uniformisation (120) de donnée de chaque ensemble de données captées ($Ec_i$) en un ensemble de données banalisées ($Eb_i$) correspondant, chaque ensemble de données banalisées ($Eb_i$) associé respectivement à au moins un capteur ($C_i$) étant formé d'une pluralité ($P_T$) de types de données identiques d'un ensemble de données banalisées à l'autre,
     - un prétraitement (124) de données fusionnant les données de tous les ensembles de données banalisées en fonction d'une zone de détection associée à chaque capteur et les transmettant à un module de traitement de données, et
     - un traitement (126) de données générant, à partir desdits ensembles de données banalisées ($Eb_1$, $Eb_2$, ..., $Eb_i$, ...$Eb_N$), au moins une information représentative de la présence ou absence d'obstruction(s).

10. Procédé (116) selon la revendication 9, dans lequel le procédé comprend en outre une supervision commandant la pluralité de capteurs ($S_1$, $S_2$, ..., $S_i$, ...$S_N$) en fonction d'au moins un paramètre d'entrée appartenant au groupe comprenant au moins :

     - un paramètre ($D_1$) de configuration de capteur ;
     - un paramètre ($D_2$) de vol de l'aéronef ;
     - un paramètre ($D_3$) représentatif d'au moins une mission de l'aéronef ;
     - un paramètre ($D_4$) représentatif d'une commande de pilotage saisie par le pilote ;
     - une information (22) représentative de la phase de vol courante de l'aéronef ;
     - un paramètre (24) représentatif du mode opérationnel de pilotage.

11. Produit programme d'ordinateur comprenant des instructions logicielles qui, lorsqu'elles sont exécutées par un ordinateur, mettent en oeuvre un procédé selon la revendication 9 ou 10.

**Patentansprüche**

1. Kollisionsvermeidungsvorrichtung (10, 38) eines Luftfahrzeugs, umfassend eine Vielzahl von Sensoren ($S_1$, $S_2$, ..., $S_i$, ...$S_N$), die Vielzahl von Sensoren ($S_1$, $S_2$, ..., $S_i$, ...$S_N$) umfassend mindestens zwei verschiedene Sensoren ($S_i$, $S_j$), wobei jeder Sensor ($S_1$, $S_2$, ..., $S_i$, ...$S_N$) geeignet ist, um jeweils seinen eigenen Satz erfasster Daten ($S_1$, $S_2$, ..., $S_i$, ...$S_N$) abhängig von der Nähe mindestens eines Hindernisses bereitzustellen, die Kollisionsvermeidungsvorrichtung (10, 38) umfassend:

     - mindestens ein Datenvereinheitlichungsmodul (12), das geeignet ist, um mindestens einen Satz erfasster Daten ($Ec_i$) in einen entsprechenden Satz banalisierter Daten ($Eb_i$) umzuwandeln, wobei jeder Satz banalisierter Daten ($Eb_i$), der jeweils mit mindestens einem Sensor ($C_i$) assoziiert ist, aus einer Vielzahl von Datentypen gebildet wird, die von einem zum anderen Satz banalisierter Daten identisch sind,
     - ein Datenverarbeitungsmodul (14), das geeignet ist, um aus den Sätzen banalisierter Daten ($Eb_1$, $Eb_2$, ..., $Eb_i$, ...$Eb_N$) mindestens eine Information zu erzeugen, die repräsentativ für das Vorhandensein oder die Abwesenheit eines Hindernisses oder von Hindernissen ist, und
     - ein Datenvorverarbeitungsmodul (18), das zumindest geeignet ist, um die Daten aller Sätze banalisierter Daten ($Eb_1$, $Eb_2$, ..., $Eb_i$, ...$Eb_N$) abhängig von einem Erfassungsbereich, der mit jedem Sensor ($S_1$, $S_2$, ..., $S_i$, ...$S_N$) assoziiert ist, zu vereinen und sie an das Datenverarbeitungsmodul zu übertragen.

2. Vorrichtung (10, 38) nach Anspruch 1, wobei die Kollisionsvermeidungsvorrichtung (10, 38) ferner ein Überwachungsmodul (20) umfasst, das geeignet ist, um die Vielzahl von Sensoren ($S_1$, $S_2$, ..., $S_i$, ...$S_N$) abhängig von mindestens einem Eingangsparameter zu steuern, der zu der Gruppe gehört, die mindestens Folgendes umfasst:

     - einen Sensorkonfigurationsparameter ($D_1$);

- einen Flugparameter ($D_2$) des Luftfahrzeugs;
- einen Parameter ($D_3$), der repräsentativ für mindestens eine Mission des Luftfahrzeugs ist;
- einen Parameter ($D_4$), der repräsentativ für einen von dem Piloten eingegebenen Steuerbefehl ist;
- eine Information (22), die repräsentativ für die aktuelle Flugphase des Luftfahrzeugs ist;
- einen Parameter (24), der repräsentativ für den Betriebsmodus der Steuerung ist.

3. Vorrichtung (10, 38) nach Anspruch 1 oder 2, wobei die Vielzahl identischer Datentypen in Anwesenheit eines erfassten Hindernisses mindestens die folgenden drei Datentypen umfasst:

- mindestens Daten, die repräsentativ für eine Hindernisposition sind;
- mindestens Daten, die repräsentativ für die Wahrscheinlichkeit einer Hinderniserfassung sind;
- mindestens Daten, die repräsentativ für die Hindernisgröße sind.

4. Vorrichtung (10, 38) nach einem der vorherigen Ansprüche, ferner umfassend ein Vervollständigungsmodul (16), das geeignet ist, um ausgehend von einem Satz banalisierter Daten ($Eb_i$), der mit einem der Sensoren ($S_i$), mindestens einen fehlenden Wert, der mit einem Typ assoziiert ist, aus der Vielzahl identischer Datentypen eines Satzes banalisierter Daten ($Eb_j$) eines anderen Sensors ($S_j$) aus der Vielzahl von Sensoren ($S_1$, $S_2$, ..., $S_i$, ...$S_N$) des Luftfahrzeugs zu vervollständigen.

5. Vorrichtung (10, 38) nach einem der vorherigen Ansprüche, wobei das Vorverarbeitungsmodul (18) ferner konfiguriert ist, um eine Zeitfilterung auf jeden Satz banalisierter Daten ($Eb_1$, $Eb_2$, ..., $Eb_i$, ...$Eb_N$), die Daten eliminiert, die mit einem Hindernis assoziiert sind, dessen Dauer der Anwesenheit in der Nähe des Luftfahrzeugs unter einem vorbestimmten Schwellenwert ist.

6. Vorrichtung (10, 38) nach einem der vorherigen Ansprüche, wobei das Vorverarbeitungsmodul (18) ferner konfiguriert ist, um das Vereinen von Daten aller Sätze banalisierter Daten ($Eb_1$, $Eb_2$, ..., $Eb_i$, ...$Eb_N$) mit einem zuvor gespeicherten Verlauf von vereinten Daten zu vergleichen.

7. Vorrichtung (10, 38) nach einem der vorherigen Ansprüche, wobei, wenn mindestens einer der Sensoren ($S_1$, $S_2$, ..., $S_i$, ...$S_N$) des Luftfahrzeugs geeignet ist, um die relative Geschwindigkeit eines Hindernisses zu bestimmen, das Datenverarbeitungsmodul (14) auch geeignet ist, um Informationen zu erzeugen, die repräsentativ für das Vorhandensein oder Nichtvorhandensein eines Driftens des Luftfahrzeugs in Schwebeflug sind.

8. Avioniksystem zum Schutz eines Luftfahrzeugs, umfassend eine Warn- und Vermeidungsvorrichtung des Reliefs und eine Kollisionsvermeidungsvorrichtung (10, 38) nach einem der vorherigen Ansprüche, wobei die Warn- und Vermeidungsvorrichtung des Reliefs und die Kollisionsvermeidungsvorrichtung (10, 38) jeweils konfiguriert sind, um sich anhand mindestens eines gleichartigen Eingangsdatums gemäß einem vorbestimmten Aktivierungs-/Deaktivierungsgrad zu aktivieren/deaktivieren.

9. Verfahren (116) zur Kollisionsvermeidung eines Luftfahrzeugs, umfassend eine Vielzahl von Sensoren ($S_1$, $S_2$, ..., $S_i$, ...$S_N$), die Vielzahl von Sensoren ($S_1$, $S_2$, ..., $S_i$, ...$S_N$) umfassend mindestens zwei verschiedene Sensoren ($S_i$, $S_j$), wobei jeder Sensor ($S_1$, $S_2$, ..., $S_i$, ...$S_N$) geeignet ist, um jeweils seinen eigenen Satz erfasster Daten ($Ec_1$, $Ec_2$, ..., $Ec_i$, ...$Ec_N$) abhängig von der Nähe mindestens eines Hindernisses bereitzustellen, wobei das Verfahren durch eine elektronische Überwachungsvorrichtung (10, 38) implementiert wird und mindestens Folgendes umfasst:

- eine Vereinheitlichung (120) von Daten von jedem Satz erfasster Daten ($Ec_i$) in einen entsprechenden Satz banalisierter Daten ($Eb_i$), wobei jeder Satz banalisierter Daten ($Eb_i$), der jeweils mit mindestens einem Sensor ($C_i$) assoziiert ist, aus einer Vielzahl ($P_T$) von Datentypen gebildet wird, die von einem zum anderen Satz banalisierter Daten identisch sind,
- eine Vorverarbeitung (124) von Daten, die die Daten aller Sätze banalisierter Daten abhängig von einem Erfassungsbereich vereint, der mit jedem Sensor assoziiert ist und sie an ein Datenverarbeitungsmodul überträgt, und
- eine Verarbeitung (126) von Daten, die ausgehend von den Sätzen banalisierter Daten ($Eb_1$, $Eb_2$, ..., $Eb_i$, ...$Eb_N$) mindestens eine Information erzeugt, die repräsentativ für das Vorhandensein oder die Abwesenheit eines Hindernisses oder von Hindernissen ist.

10. Verfahren (116) nach Anspruch 9, wobei das Verfahren ferner eine Überwachung umfasst, die die Vielzahl von Sensoren ($S_1$, $S_2$, ..., $S_i$, ...$S_N$) abhängig von mindestens einem Eingangsparameter steuert, der zu der Gruppe gehört, die mindestens Folgendes umfasst:

- einen Sensorkonfigurationsparameter ($D_1$);
- einen Flugparameter ($D_2$) des Luftfahrzeugs;
- einen Parameter ($D_3$), der repräsentativ für mindestens eine Mission des Luftfahrzeugs ist;

- einen Parameter ($D_4$), der repräsentativ für einen von dem Piloten eingegebenen Steuerbefehl ist;
- eine Information (22), die repräsentativ für die aktuelle Flugphase des Luftfahrzeugs ist;
- einen Parameter (24), der repräsentativ für den Betriebsmodus der Steuerung ist.

11. Computerprogrammprodukt, umfassend Softwareanweisungen, die, wenn sie von einem Computer ausgeführt werden, ein Verfahren nach einem der Ansprüche 9 bis 10 implementieren.

**Claims**

1. An anti-collision device (10, 38) of an aircraft comprising a plurality of sensors ($S_1$, $S_2$, ..., $S_i$, ...$S_N$), the plurality of sensors ($S_1$, $S_2$, ..., $S_i$, ...$S_N$) comprising at least two separate sensors ($S_i$, $S_j$), each sensor ($S_1$, $S_2$, ..., $S_i$, ...$S_N$) being configured to respectively deliver its own set of captured data ($S_1$, $S_2$, ..., $S_i$, ...$S_N$) as a function of the proximity of at least one obstruction,
said anti-collision device (10, 38) comprising:

   - at least one data homogenization module (12) configured to transform at least one set of captured data ($Ec_i$) in a corresponding set of unmarked data ($Eb_i$), each set of unmarked data ($Eb_i$) respectively associated with at least one sensor ($C_i$) being made up of a plurality of identical data types from one set of unmarked data to another,
   - a data processing module (14) configured to generate, from said sets of unmarked data ($Eb_1$, $Eb_2$, ..., $Eb_i$, ... $Eb_N$), at least one piece of information representative of the presence or absence of obstruction(s), and
   - - a data preprocessing module (18) at least configured to merge the data from all of the unmarked data sets ($Eb_1$, $Eb_2$, ..., $Eb_i$, ...$Eb_N$) as a function of a detection zone associated with each sensor ($S_1$, $S_2$, ..., $S_i$, ...$S_N$) and sending them to the data processing module.

2. The device (10, 38) according to claim 1, wherein the anti-collision device (10, 38) further comprises:

   - a supervision module (20) configured to command the plurality of sensors ($S_1$, $S_2$, ..., $S_i$, ...$S_N$) as a function of at least one input parameter belonging to the group comprising at least:

      - a sensor configuration parameter ($D_1$);
      - a flight parameter ($D_2$) of the aircraft;
      - a parameter ($D_3$) representative of at least one mission of the aircraft;
   - a parameter ($D_4$) representative of a piloting command entered by the pilot;
   - information (22) representative of the current flight phase of the aircraft;
   - a parameter (24) representative of the operational piloting mode.

3. The device (10, 38) according to claim 1 or claim 2, wherein the plurality of identical data types comprises at least the following three data types, in the presence of a detected obstruction:

   - at least one datum representative of an obstruction position;
   - at least one datum representative of the likelihood of obstruction detection;
   - at least one datum representative of the obstruction size.

4. The device (10, 38) according to any one of the preceding claims, further comprising a completion module (16) configured to complete, from a set of unmarked data ($Eb_i$) associated with one of the sensors ($S_i$), at least one missing value associated with a type, from the plurality of identical data types of a set of unmarked data ($Eb_j$) of another sensor ($S_j$) of the plurality of sensors ($S_1$, $S_2$, ..., $S_i$, ...$S_N$) of the aircraft.

5. The device (10, 38) according to any one of the preceding claims, wherein the preprocessing module (18) is further configured to apply temporal filtering to each set of unmarked data ($Eb_1$, $Eb_2$, ..., $Eb_i$, ... $Eb_N$) eliminating the data associated with an obstruction whose presence duration near the aircraft is below a predetermined threshold.

6. The device (10, 38) according to any one of the preceding claims, wherein the preprocessing module (18) is further configured to compare the merging of the data of all of the sets of unmarked data ($Eb_1$, $Eb_2$, ..., $Eb_i$, ... $Eb_N$) to a history of merged data previously stored.

7. The device (10, 38) according to any one of the preceding claims, wherein when at least one of the sensors ($S_1$, $S_2$, ..., $S_i$, ...$S_N$) of the aircraft is configured to determine the relative speed of an obstruction, the data processing module (14) is also configured to generate information representative of the presence or absence of drift of the aircraft during hovering.

8. An avionics system for protecting an aircraft comprising a terrain awareness and warning device and an anti-collision device (10, 38) according to any one of the preceding claims, the terrain awareness and warning device and the anti-collision device (10, 38) each being configured to be activated/deactivated according to a predetermined degree of activation/deactivation from at least one input datum of the same type.

9.  An anti-collision method (116) of an aircraft comprising a plurality of sensors $(S_1, S_2, ..., S_i, ...S_N)$, the plurality of sensors $(S_1, S_2, ..., S_i, ...S_N)$ comprising at least two separate sensors $(S_i, S_j)$, each sensor $(S_1, S_2, ..., S_i, ...S_N)$ being configured to respectively deliver its own set of captured data $(Ec_1, Ec_2, ..., Ec_i, ... Ec_N)$ as a function of the proximity of at least one obstruction,
    the method being implemented by an anti-collision device (10, 38) and comprising at least:

    - a data homogenization (120) of each set of captured data $(Ec_i)$ in a corresponding set of unmarked data $(Eb_i)$, each set of unmarked data $(Eb_i)$ respectively associated with each sensor $(C_i)$ being made up of a plurality $(P_T)$ of identical data types from one set of unmarked data to another,
    - a data preprocessing (124) merging the data from all of the unmarked data sets as a function of a detection zone associated with each sensor and sending them to the data processing module;
    - a data processing (126) generating, from said sets of unmarked data $(Eb_1, Eb_2, ..., Eb_i, ... Eb_N)$, at least one piece of information representative of the presence or absence of obstruction(s).

10. A method (116) according to claim 9, wherein the method further comprises a supervision commanding the plurality of sensors (S1, S2, ..., Si, ...SN) as a function of at least one input parameter belonging to the group comprising at least:

    - a sensor configuration parameter (D1);
    - a flight parameter (D2) of the aircraft;
    - a parameter (D3) representative of at least one mission of the aircraft;
    - a parameter (D4) representative of a piloting command entered by the pilot;
    - information (22) representative of the current flight phase of the aircraft;
    - a parameter (24) representative of the operational piloting mode.

11. A computer program product comprising software instructions which, when executed by a computer, carry out a method according to claim 9 or 10.

FIG.1

## FIG.2

FIG.3

FIG.4

## FIG.5

FIG.6

FIG.7

56

$Vo_7$

$O_7$

$Vo_8$

$O_8$

$O_9$

$Vo_9$

45

58

FIG.8

## FIG.9

60

64

$Vo_{12}$

$V_{62}$

$O_{12}$

62

## FIG.10

$Vr$

60

64

$Vo_{12}$

$V_{62}$

$O_{12}$

62

FIG.11

FIG.12

$E_1$

62

$E_2$

$M_a$

$O_{13}$

68

## FIG.13

FIG.14

FIG.15

## FIG.16

| | |
|---|---|
| Obstruction mobile | |
| Obstruction fixe | |
| Hauteur de l'obstruction | |
| Hauteur non connue | |
| Distance | |
| Evolution de la distance | |

# FIG.17

$$S_1,...,S_i,...,S_N$$

82

10

84

## FIG.18

$$S_1,...,S_i,...,S_N \qquad 82$$

$$10$$

$$84$$

$$86$$

# FIG.19

$$S_1, ..., S_i, ..., S_N$$

82

10

84

86

88

**FIG.20**

$$S_1, ..., S_i, ..., S_N$$

88

10

84

86

# FIG.21

FIG.22

EP 3 648 439 B1

116

118

120

122

124

126

128

FIG.23

**RÉFÉRENCES CITÉES DANS LA DESCRIPTION**

**Documents brevets cités dans la description**

- FR 2773609
- CN 108319982 A
- US 2018095467 A1
- US 9519286 B2